(19) Europäisches Patentamt
European Patent Office
Office européen des brevets

(11) EP 1 531 339 B1

(12) **EUROPÄISCHE PATENTSCHRIFT**

(45) Veröffentlichungstag und Bekanntmachung des Hinweises auf die Patenterteilung:
**16.01.2008 Patentblatt 2008/03**

(51) Int Cl.:
***G01S 5/18*** *(2006.01)* ***G01S 5/20*** *(2006.01)*
***G01S 3/802*** *(2006.01)*

(21) Anmeldenummer: **04026969.8**

(22) Anmeldetag: **12.11.2004**

(54) **Verfahren zum passiven Bestimmen von Zieldaten**

Method of passive determination of target data

Procédé pour déterminer passivement les données d'une cible

(84) Benannte Vertragsstaaten:
**AT BE BG CH CY CZ DE DK EE ES FI FR GB GR HU IE IS IT LI LU MC NL PL PT RO SE SI SK TR**

(30) Priorität: **12.11.2003 DE 10352738**

(43) Veröffentlichungstag der Anmeldung:
**18.05.2005 Patentblatt 2005/20**

(73) Patentinhaber: **ATLAS ELEKTRONIK GMBH**
**28305 Bremen (DE)**

(72) Erfinder: **Steimel, Ulrich, Dr.**
**28876 Oyten (DE)**

(56) Entgegenhaltungen:
**DE-A1- 3 446 658** **DE-A1- 10 129 726**
**US-A- 5 877 998** **US-A- 6 009 185**

- **VLIEGER J H DE ET AL: "MAXIMUM LIKELIHOOD ESTIMATION FOR LONG-RANGE TARGET TRACKING USING PASSIVE SONAR MEASUREMENTS" IEEE TRANSACTIONS ON SIGNAL PROCESSING, IEEE, INC. NEW YORK, US, Bd. 40, Nr. 5, 1. Mai 1992 (1992-05-01), Seiten 1216-1227, XP000300968 ISSN: 1053-587X**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zum passiven Bestimmen von Zieldaten durch richtungsselektiven Empfang von Schallwellen der im Oberbegriff des Anspruchs 1 genannten Art.

Um ohne Eigenverrat von einem Trägerfahrzeug, z.B. einem Oberflächenschiff oder U-Boot, Position, Geschwindigkeit und Kurs eines Ziels, z.B. eines Oberflächenschiffs, U-Boots oder Torpedos als Zieldaten zu bestimmen, werden mit einer Sonar-Empfangsanlage Schallwellen des Zielgeräusches empfangen und Peilwinkel zum Ziel gemessen. Aus diesen Peilwinkeln wird zusammen mit den Eigenpositionen des Trägerfahrzeugs eine Position des Ziels geschätzt und ein zugehöriger geschätzter Peilwinkel berechnet. Iterativ wird die Differenz zwischen dem gemessenen und dem geschätzten Peilwinkel solange verkleinert, bis eine Fehlergrenze unterschritten ist. Die zugrundeliegende geschätzte Position wird als Zielposition erkannt.

Ausgehend von einer Anfangsposition des Ziels, die z.B. willkürlich als Startposition auf einem ersten Peilstrahl gewählt wird oder durch andere an Bord befindliche Sensoren bekannt ist, werden Positionen aus geschätzten x-y-Komponenten für das Ziel berechnet und daraus geschätzte Peilwinkel bestimmt. Das Trägerfahrzeug fährt für die Peilwinkelmessungen mit konstantem Kurs während einer vorgegebenen Zeitdauer und legt einen Weg zurück, der Eigenleg genannt wird, nach einem Kurswechsel wird das Ziel von diesem Eigenleg weiter gepeilt. Die jeweils gemessenen Peilwinkel werden mit den geschätzten Peilwinkeln verglichen und eine Peilwinkeldifferenz gebildet, bei deren Minimum der geschätzte Peilwinkel den wahren Peilwinkel bis auf einen Restfehler liefert. Der Restfehler ist abhängig von einer vorgebbaren Schwelle. Eine solche Filteranordnung ist beispielsweise in der DE 34 46 658 C2 beschrieben. Die Iterationszeit dieser Filteranordnung wird maßgeblich durch zusätzliche Eingaben bestimmt. Beispielsweise wird die Anfangsposition oder Stützwerte, die durch Beobachtung oder Messwerte anderer Sensoren an Bord des Trägerfahrzeugs ermittelt werden, z.B. Sehrohrbeobachtungen oder Radarmessungen eingegeben. Aus diesen Stützwerten werden Filterkoeffizienten ermittelt, die zu einer verbesserten ersten Schätzung der Zielposition führen.

Aus der US-PS 5 877 998 ist ein anderes Verfahren bekannt, bei dem im Gegensatz zur beschriebenen iterativen Minimierung der Peilwinkeldifferenz rekursiv Position und Geschwindigkeit eines Ziel als Zieldaten geschätzt werden. Mit einem Bewegungsmodell für das Trägerfahrzeug werden aus Navigationssensordaten Bewegungsdaten des Trägerfahrzeugs gewonnen. In einem zweiten Modell werden Zielbewegungsdaten zur Prädiktion modelliert. Aus Empfangssignalen, die während der Fahrt längs eines Eigenlegs empfangen werden, werden Peilwinkel, die zeitliche Änderung des Peilwinkels, also die Peilwinkelgeschwindigkeit, und die Änderung der Peilwinkelgeschwindigkeit gewonnen. Diese Messdaten werden geglättet und für die Vorhersage von Zieldaten benutzt. Die vorausgesagten Zieldaten werden mit den geglätteten Messdaten aus zwei vorangegangenen Eigenlegs korrigiert und dem Zielbewegungsdatenmodell für die nächste Prädiktion zugeführt. Für jede neue Zieldatenschätzung ist ein Manöver des Trägerfahrzeugs notwendig, da nur dann wieder geglättete Messdaten für eine Korrektur und eine neue Prädiktion vorliegen.

In der US 6 009 185 ist ein Verfahren beschrieben, bei dem für das Schätzen der Zieldaten mittels eines neuronalen Netzes die Anfangsposition des Ziel und A-Priori-Wissen über das Ziel, das Zielverhalten und das Zielgebiet verwendet werden. Das A-Priori-Wissen beinhaltet z.B. die maximal mögliche Geschwindigkeit des Ziels, Tiefe und Tiefenänderungen des Ziels, Beschleunigungen, typisches Manöververhalten und Umweltdaten. Es werden in einem dreidimensionalen Koordinatensystem Hypothesen über Fahrwege des Ziels ausgehend von der bekannten Anfangsposition und unter zur Hilfenahme des A-Priori-Wissens getroffen und mit aus Kontakten mit dem Ziel geschätzten Fahrwegen des Ziels durch Korrelation verglichen. Für die Funktion dieses Verfahrens ist die Kenntnis von Stützwerten anderer Sensoren, hier insbesondere die Anfangsposition des Ziels, notwendig.

Es ist Aufgabe der vorliegenden Erfindung, ein Verfahren der im Oberbegriff des Anspruchs 1 genannten Art zu schaffen, bei dem die Iterationszeit bei Verwendung der genannten Filteranordnung vergleichbar oder sogar kürzer wird, ohne dass Messwerte anderer Sensoren an Bord des Trägerfahrzeugs als Stützwerte benötigt werden.

Die Aufgabe wird erfindungsgemäß durch die Merkmale im Kennzeichenteil des Anspruchs 1 gelöst.

Empfangssignale mindestens einer elektroakustischen Wandleranordnung, beispielsweise einer Hufeisenbasis oder Seitenantenne an Bord eines U-Boots als Trägerfahrzeug und/oder einer von einem Oberflächenschiff oder einem U-Boot nachgeschleppten Schleppantenne werden in der Sonar-Empfangsanlaqe richtungsselektiv zu Gruppensignalen zusammengefasst und die Pegel der Gruppensignale beobachtet. Eine Erhöhung des Pegels deutet darauf hin, dass ein Ziel auf einem Peilstrahl eines dem Gruppensignal zugeordneten ersten Peilwinkels liegt. Die Entfernung des Ziels ist unbekannt, nur seine Peilung liegt vor. Vom Orter wird beispielsweise ein Grenzwert für eine maximal mögliche Entfernung des Ziels vorgegeben, die er aus geographischen und ozeanographischen Kenntnissen und der Spezifikation der Sonar-Empfangsanlage ableitet, z.B. sechzig Kilometer. Eine minimale Entfernung, von z.B. einem Kilometer, wird aus einer möglichen Bedrohungssituation für das Trägerfahrzeug abgeleitet. Grenzwerte der Geschwindigkeit liegen zwischen etwas über Null Knoten, um unbewegte Ziele auszuschließen, und maximalen Geschwindigkeitsangaben von Schnellbooten oder Torpedos. Schon grobe Vorgaben verkürzen die Rechenzeit und ermöglichen, dass Schätzungen von Zielpositionen ausgeschlossen werden, die mit der Sonar-Empfangsanlage unmöglich erfasst werden können. Aus diesen vorgegebenen Grenzwerten werden Randbedingungen für Positionskomponenten und Geschwindigkeitskomponenten ermittelt und dem Schätzen der Position des Ziels zugrunde gelegt, mit denen der geschätzte Peilwinkel zur Minimierung der Peilwinkeldifferenz bestimmt wird.

Der Vorteil des erfindungsgemäßen Verfahrens nach Anspruch 1 besteht darin, dass durch die Grenzwerte nur physikalisch und technisch sinnvolle Parameter über die Position des Ziels, seine Geschwindigkeit und seinen Kurs in den iterativen Schätzprozess eingegeben werden. Völlig unlogische Ergebnisse, wie z.B. eine Geschwindigkeit von hundert Knoten oder eine Entfernung von tausend Kilometern, werden von vornherein ausgeschlossen, die bei stark verrauschten Empfangssignalen durchaus im Rahmen der Iteration bisher anfallen konnten.

Der obere Grenzwert für die Zielentfernung wird z.B. aus an Bord befindlichen Schallausbreitungsprogrammen für das Seegebiet abgeleitet. Da das Ziel nur in solchen Zonen zu orten ist, die eine Schallübertragung vom Ziel zum Empfangsort gestatten und der Ortungsreichweite der Sonar-Empfangsanlage entsprechen, ist es vorteilhaft, diese Kenntnisse zu nutzen, da weiter entfernt liegende Ziele überhaupt nicht detektiert werden könnten.

Schon allein die Einschränkung des Kurses auf anlaufende Ziele gemäß der vorteilhaften Weiterbildung des erfindungsgemäßen Verfahrens nach Anspruch 2 erhöht drastisch die Konvergenzgeschwindigkeit der Positionsschätzung, sogar auch dann, wenn der Kurs des Ziels nahezu rechtwinklig zum Peilstrahl verläuft und ein gering davon abweichender ablaufender Kurs bei der Positionsschätzung nicht mehr berücksichtigt wird. Die erste Eingabe der Begrenzung des Kurses auf anlaufende Ziele sorgt bereits dafür, dass fehlerhafte Positionsschätzungen ausgeschlossen werden.

Die Grenzwerte für die Zielgeschwindigkeit werden aus Fahreigenschaften unterschiedlicher Wasserfahrzeuge, z.B. Überwasserschiffe, U-Boote und Torpedos abgeleitet.

Indem die Änderung des Peilwinkels gemessen wird, ist es gemäß der vorteilhaften Weiterbildung des erfindungsgemäßen Verfahrens nach Anspruch 3 möglich, die Kursrichtung bezüglich des ersten Peilstrahls festzustellen und mit dieser Seitenkennung die Grenzen für den Kurs weiter einzuschränken, mit dem sich das Ziel der Sonar-Empfangsanlage nähert.

Durch die Vorgabe von Grenzwerten wird die Schätzung der Zieldaten der Realität angepasst. Ein nicht rekursives iteratives Rechenverfahren zum Minimieren der Peilwinkeldifferenz oder des Quadrats dieser Differenz ist durch ein Verfahren zum Lösen von linearen Gleichungen unter Nebenbedingungen nach der Methode der kleinsten Fehlerquadrate gelöst und in Kapitel 23, Seite 158 bis 173, Linear Least Squares with linear inequality constraints, in dem Buch "Solving least squares problems" von Charles R. Lawson, Richard J. Hansen, Classics, In Applied Mathematics, SIAM, ISBN-0-89871-356-0, 1995 beschrieben. Außerdem gibt es ein Programm LSQLIN.M und LSI.M in MATLAB optimisation tool box, die den in dem Buch angegebenen Algorithmus numerisch lösen. Dieses mathematische Werkzeug ist bestens geeignet, aus vorgegebenen Grenzwerten die Zielposition mit dem Vorteil zu bestimmen, dass sich auch unter schwierigsten Ortungsverhältnissen die Konvergenzzeiten für die Bestimmung der Zieldaten nahezu halbieren.

Während der Fahrt des Trägerfahrzeugs auf dem jeweiligen Eigenleg längs seines Kurses werden laufend Peilwinkel gemessen. Bei der vorteilhaften Weiterbildung des erfindungsgemäßen Verfahrens nach den Ansprüchen 4 und 5 wird der nach einem vorgebbaren Zeitintervall zuletzt gemessene Peilwinkel dazu benutzt, die Grenzwerte für mögliche Geschwindigkeiten und Entfernungen des Ziels bei anlaufendem Kurs weiter einzuschränken. Damit das Ziel von der maximalen Entfernung auf dem ersten Peilstrahl gerade noch den zuletzt gemessenen Peilstrahl erreichen kann, um dort gepeilt zu werden, muss es mit maximaler Geschwindigkeit dorthin fahren. Aus der Lotlänge zwischen der maximalen Entfernung und dem der letzten Peilung zugeordneten Peilstrahl geteilt durch das Zeitintervall ist die obere Grenze der Geschwindigkeit bestimmt. Die Lotlänge zum ersten Peilstrahl schließt den minimalen Kurswinkel für den anlaufenden Kurs ein und bildet den unteren Grenzwert für den Kurs. Die untere Grenze der Geschwindigkeit oder die minimale Entfernung wird dadurch ermittelt, dass das Ziel während des Zeitintervalls längs des mittleren Grenzwertes für den Kurs einen Weg von der minimalen Entfernung des Ziels auf dem ersten Peilstrahl bis zum letzten Peilstrahl zurücklegt. Dieser Weg geteilt durch das Zeitintervall gibt die Grenze für die minimale Geschwindigkeit an.

Der andere obere Grenzwert des Kurses wird gemäß der vorteilhaften Weiterbildung nach Anspruch 6 ermittelt, indem das Ziel von der minimalen Entfernung auf dem ersten Peilstrahl mit maximaler Geschwindigkeit während des Zeitintervalls den zweiten Peilstrahl erreicht. Ein der maximalen Geschwindigkeit unter Berücksichtigung des Zeitintervalls entsprechendes Wegstück schneidet den letzten Peilstrahl und schließt den maximalen Kurswinkel ein.

Aus den Grenzwerten für die Geschwindigkeiten und den Kurs werden nach der vorteilhaften Weiterbildung des erfindungsgemäßen Verfahren nach den Ansprüchen 7, 8 und 9 die Randbedingungen in einem x-y-Koordinatensystem zum Schätzen einer neuen Zielposition berechnet. Es wird davon ausgegangen, dass sich das Ziel längs der beiden Grenzwerte für den Kurs mit minimaler und maximaler Geschwindigkeit innerhalb des Zeitintervalls bewegen könnte und auf dem nächsten Peilstrahl neue Positionen einnimmt. Die Grenzwerte der Geschwindigkeit werden in orthogonale Geschwindigkeitskomponenten zerlegt, deren Extremwerte ein Grenzgebiet aufspannen. Dieses Grenzgebiet begrenzt alle für das Ziel möglichen Geschwindigkeitsvektoren nach Betrag und Richtung und gibt die zugehörigen Geschwindigkeitskomponenten an. Mit diesen Geschwindigkeitskomponenten und den Positionskomponenten in x-y-Richtung für alle Entfernungen innerhalb der vorgegebenen Grenzen auf dem ersten Peilstrahl werden eine Zielposition und ein Geschwindigkeitsvektor des Ziels, der in Kursrichtung weist, geschätzt. Aus der sich daraus ergebenden Zielbahn, die einen Peilfächer aus Peilstrahlen der bisher gemessenen Peilwinkel kreuzt, werden Zielpositionen geschätzt und geschätzte Peilwinkel ermittelt. Alle geschätzten Peilwinkel werden mit den gemessenen Peilwinkeln zum Bestimmen des kleinsten Fehlerquadrats herangezogen und das Minimum der Peilwinkeldifferenzen gesucht. Der Vorteil besteht insbesondere in einer weiteren Einschränkung des Unsicherheitsgebiets für mögliche Zielstartpositionen und Geschwindigkeitsvektoren und damit schnelleren Konvergenz des Filterverfahrens durch weniger Iterationsschritte.

Die vorteilhaften Weiterbildungen des erfindungsgemäßen Verfahrens nach den Ansprüchen 10 - 12 berücksichtigen die Differenz der Grenzwerte für einen anlaufenden Kurs beim Bestimmen der Randbedingungen für die Geschwindigkeitskomponenten, damit die Konvergenzzeiten weiter minimiert werden können. Das kartesische Koordinatensystem zum Bestimmen der Randbedingungen wird gegenüber dem Bezugssystem für Peilung und Kurs um einen Optimierungsdrehwinkel gedreht, der abhängig von der Differenz der durch die Grenzwerte festgelegten Kurswinkel gewählt wird. Dadurch wird bei entweder nur rechtsweisenden oder nur linksweisenden Grenzwerten und eine Differenz kleiner 90° das Grenzgebiet auf einen Quadranten beschränkt. Bei einer Differenz der durch die Grenzwerte festgelegten Kurswinkel zwischen 90° und 180° wird der Optimierungsdrehwinkel so gewählt, dass die maximalen und minimalen Geschwindigkeiten längs der Grenzwerte des Kurses symmetrisch zur y-Achse in zwei Quadranten liegen.

Mit der vorteilhaften Weiterbildung des erfindungsgemäßen Verfahrens nach Anspruch 13 wird bei einer Differenz der vorgegebenen Kurswinkel größer 180°, bei der der Kurs sogar ablaufend geschätzt werden kann, der Optimierungsdrehwinkel gleich dem negativen gemessenen Peilwinkel gewählt.

Zum passiven Bestimmen der Zieldaten fährt das Trägerfahrzeug längs eines Eigenlegs mit konstanter Geschwindigkeit und Kurs und misst Peilwinkel zum Ziel. Bei Verwendung einer an Bord befindlichen Antenne und einer weiter hinter dem Trägerfahrzeug befindlichen nachgeschleppten Antenne können die Zieldaten ohne Kurswechsel bereits bestimmt werden. Wenn das Trägerfahrzeug nur eine einzige Empfangsantenne zum Peilen aufweist, können die Zieldaten erst nach einem ersten Eigenmanöver bestimmt werden. Die vorteilhafte Weiterbildung des erfindungsgemäßen Verfahrens nach Anspruch 14 erlaubt eine Zieldatenmessung bereits beim Durchfahren des ersten Eigenlegs bei Verwendung nur einer Empfangsantenne. Aus der DE 101 29 726 A1 ist bekannt, dass die Empfangsfrequenz abhängig ist von der eigenen radialen Geschwindigkeitskomponente des Trägerfahrzeugs und der in gleiche Richtung weisenden radialen Geschwindigkeit des Ziels. Bei Kenntnis der eigenen Geschwindigkeit kann der Eigenanteil an der Dopplerverschiebung eliminiert werden und einzig und allein der Zielanteil betrachtet werden. Abgesehen von der Frequenzänderung über der Zeit, dem sog. Frequenzhub, findet während der Fahrt längs des Eigenleg eine Peilwinkeländerung über der Zeit statt. Die Zeit, bis Zieldaten stabil geschätzt werden können, nennt man Konvergenzzeit. Die Konvergenzzeit ist um so kürzer, je größer der Frequenzhub beim Durchfahren eines Eigenlegs ist.

Nach einer Zieldetektion werden die Gruppensignale der elektroakustischen Wandleranordnung einer Fourier-Transformation unterworfen und die Frequenz von Spektrallinien im Frequenzspektrum der Gruppensignale bestimmt. Die Frequenz der Spektrallinie mit dem größten Pegel oder der Frequenzabstand benachbarter Spektrallinien wird als Empfangsfrequenz zusammen mit dem gemessenen Peilwinkel der Zieldatenschätzung zugrundegelegt. Es werden Zielpositionen geschätzt und dazu geschätzte Peilwinkel ermittelt. Zwischen dem gemessenen und geschätzten Peilwinkel wird eine Peilwinkeldifferenz bestimmt. Außerdem wird aus den gleichen geschätzten Zielpositionen und ihren zeitlichen Änderungen eine Dopplerverschiebung und eine vom Ziel abgestrahlte oder ausgesendete Sendefrequenz geschätzt. Die geschätzte Sendefrequenz wird entsprechend der geschätzten Dopplerverschiebung frequenzverschoben und bildet die geschätzte Dopplerfrequenz von der die Empfangsfrequenz abgezogen wird. Der Unterschied zwischen Empfangsfrequenz und geschätzter Dopplerfrequenz wird als Frequenzdifferenz zusammen mit der Peilwinkeldifferenz für die Bestimmung der Zieldaten nach dem Least-Mean-Square-Algorithmus verwendet.

Für die vorgegebenen Grenzwerte der Geschwindigkeit werden nach der vorteilhaften Weiterbildung des erfindungsgemäßen Verfahrens nach Anspruch 14 Grenzen der Dopplerverschiebung ermittelt und mit der gemessenen Empfangsfrequenz verknüpft. So erhält man Grenzwerte der geschätzten Sendefrequenz. Aus den geschätzten Zielpositionen werden Dopplerverschiebungen ermittelt und mit der geschätzten Sendefrequenz und ihren Grenzen verknüpft. Die Frequenzdifferenz zur gemessenen Empfangsfrequenz wird für die Zieldatenbestimmung zusammen mit der Peilwinkeldifferenz iterativ minimiert. Der Vorteil des erfindungsgemäßen Verfahrens nach Anspruch 14 besteht insbesondere darin, dass bei der Minimierung der Frequenzdifferenz die geschätzten Dopplerfrequenzen zugrundegelegt werden, die aus möglichen Geschwindigkeitskomponenten der geschätzten Zielposition und ihrer Grenzen bestimmt werden. Diese Geschwindigkeitskomponenten entsprechen unter Berücksichtigung der Peilung zum Ziel den Grenzen einer radialen Geschwindigkeitskomponente, die ihrerseits die Dopplerverschiebung der Sendefrequenz des Ziels bewirkt. Durch die Bestimmung und Hinzuziehung der Empfangsfrequenz zum Schätzen der Zieldaten besteht der Vorteil, eine erste Zielposition oder die Startposition ohne Eigenmanöver zu bestimmen, mehrere Ziele und ihre Zieldaten unter der gleichen Peilung zu trennen und zu bestimmen sowie die Konvergenzzeiten für die Zielpositionsschätzungen weiter zu verkürzen.

Die Erfindung ist anhand der Zeichnung in einem Ausführungsbeispiel für ein Verfahren zum passiven Bestimmen von Zieldaten mit einer Sonar-Empfangsanlage näher beschrieben. Es zeigen:

Fig. 1 ein Szenario für die Bestimmung von Zieldaten mit Grenzwerten,

Fig. 2,3 x-y-Koordinatensysteme zum Bestimmen der Randbedingungen für orthogonale Geschwindigkeitskomponenten,

Fig. 4 Diagramme, die die Konvergenz von Zieldaten veranschaulichen,

Fig. 5 ein modifiziertes Szenario,

Fig. 6 ein x-y-Koordinatensystem mit wahren und geschätzten Zielpositionen,

Fig. 7 ein Blockschaltbild,

Fig. 8,9 Fehlerplots für unterschiedliche Zielentfernungen.

Fig. 1 zeigt ein Szenario in einem x-y-Koordinatensystem für die passive Bestimmung von Zieldaten. Mit einer elektroakustischen Wandleranordnung einer Sonar-Empfangsanlage, z.B. einer Linearantenne an Bord eines Trägerfahrzeugs oder einer Schleppantenne, wird ein von einem Ziel abgestrahltes Geräusch aus einer Einfallsrichtung längs einem ersten Peilstrahl $P_{first}$ unter einem ersten Peilwinkel $B_{first}$ detektiert. Das Ziel befindet sich auf anlaufendem Kurs $B_{first} + 90 < K_{min} \leq K \leq K_{max} < B_{first} - 90$. Zur Zeit to befindet sich das Trägerfahrzeug im Ursprung 0/0. Die y-Achse gibt die Nordrichtung $N_0$ als Bezugsrichtung an. Zum Zeitpunkt $t_1$ hat das Trägerfahrzeug den Ort II mit konstanter Eigengeschwindigkeit $V_{Eigen}$ erreicht, während das Ziel auf seinem Kurs K mit einer Geschwindigkeit V eine nächste Zielposition einnimmt. Auf dem ersten Peilstrahl $P_{first}$ sind vorgegebene Grenzwerte $R_{min}$ und $R_{max}$ für die Entfernung des Ziels mit $Z_{0min}$ und $Z_{0max}$ bezeichnet und vorgegebene Grenzwerte $K_{min}$ und $K_{max}$ für einen anlaufenden Kurs des Ziels eingetragen. Wenn sich das Ziel unmittelbar auf dem Peilstrahl $P_{first}$ auf Kollisionskurs dem Trägerfahrzeug nähert, beträgt der maximale Grenzwert für den Kurs

$$K_{max} = B_{first} + 180° \qquad (1).$$

Wenn das Ziel sich querab weiterbewegt, beträgt der Kurswinkel

$$K_{min} = B_{first} \pm 90° \qquad (2).$$

Eine Auswanderung der Peilung von dem Peilwinkel $B_{first}$ zum Peilwinkel $B_{last}$ zeigt, dass das Ziel nicht auf Kollisionskurs fährt. Die zeitliche Änderung der Peilung schränkt den Kurs durch eine Seitenkennung rechts oder links vom Peilstrahl $P_{first}$ ein und begrenzt damit den Kurs:

$$B_{first} + 90° \leq K < B_{first} + 180° \qquad (3).$$

Es wird ein Grenzwert für die maximale Geschwindigkeit $V_{max}$ vorgegeben und vorausgesetzt, dass sich das Ziel Z bewegt, so dass die untere Grenze der Geschwindigkeit $V_{min} > 0$ ist:

$$0 < V \leq V_{max} \qquad (4).$$

Mit der maximalen Geschwindigkeit kann sich das Ziel von $Z_{0max}$ bei $R_{max}$ oder von $Z_{0min}$ bei $R_{min}$ um das

Wegstück $V_{max}$ dt unter einem Kurswinkel $B_{first} + 90° \leq K < B_{first} + 180°$ zu einem Ort auf den gestrichelt angegebenen Kreisbögen 10 und 11 bewegen. Ist die Geschwindigkeit V kleiner, befindet sich das Ziel innerhalb der angegebenen Kreissegmente. Die Randbedingungen für die Koordinaten für die geschätzte Zielposition werden unter Berücksichtigung der Grenzwerte $R_{min}$, $R_{max}$, $K_{min}$, $K_{max}$ und $V_{max}$ berechnet.

Da die Entfernung R zum Ziel zwischen $R_{min}$ und $R_{max}$ liegen kann, ist das mögliche Zielgebiet durch die schraffierte Fläche in Fig. 1 umrissen und begrenzt.

In Fig. 2a wird als weiteres Beispiel ein anlaufender Kurs des Ziels von z.B. 100 < K < 260 als Grenzwerte für den Kurs vorgegeben. Der Peilwinkel beträgt $B_{first} = 0°$. Aus Beobachtungen werden beispielsweise Grenzwerte der Geschwindigkeit $V_{min} < V < V_{max}$ mit 5Kn < V < 20Kn ermittelt. Die Differenz von maximalem Kurswinkel $K_{max} < 260°$und minimalem Kurswinkel $K_{min} > 100°$ beträgt

$$K_{max} - K_{min} = 160° \text{ und ist kleiner als } 180°.$$

Fig. 2a zeigt für dieses Beispiel in einem kartesischen Koordinatensystem die Zerlegung der Grenzwerte der Geschwindigkeit längs des maximalen und minimalen Kurswinkels $K_{max}$, $K_{min}$ in orthogonale x-y-Geschwindigkeitskomponenten an einer beliebigen Entfernung zwischen den Grenzwerten von R. Der Ursprung des Koordinatensystems kennzeichnet diese Entfernung. Die x-y-Geschwindigkeitskomponenten sind neben den x-y-Positionskomponenten für die Grenzwerte der Entfernung die Randbedingungen für die Eingabe in die Iterationsrechnung zum Bestimmen des Minimums der Peilwinkeldifferenz oder der quadrierten Peilwinkeldifferenz aus gemessenem und geschätztem Peilwinkel. Die in minimale und maximale Kursrichtungen weisenden Grenzwerte $V_{max}$ und $V_{min}$ der Geschwindigkeit werden in Geschwindigkeitskomponenten $\pm V_{xmax}/\pm V_{ymax}$ und $\pm V_{xmin/}+V_{ymin}$ zerlegt. Ein durch die maximale und minimale Geschwindigkeitskomponente in x- und y-Richtung eingeschlossenes schraffiertes Rechteck umschließt ein Grenzgebiet, innerhalb dessen sich das Ziel mit einer jeweiligen Geschwindigkeit bewegen kann, die durch die Randbedingungen

$$-V_{xmax} < V_x < +V_{xmax}$$

$$-V_{max} < V_y < -V_{ymin}$$

begrenzt sind. Aus den sechs Grenzwerten werden acht Randbedingungen ermittelt, die in dem Rechenalgorithmus verarbeitet werden. Mit diesen Geschwindigkeits-Randbedingungen aus den Grenzwerten von Kurs und Geschwindigkeit und den Positionsrandbedingungen aus den Grenzwerten für die Entfernung werden Zielpositionen ermittelt und ein zugehöriger Peilwinkel geschätzt. Diese zugehörigen geschätzten Peilwinkel werden mit dem gemessenen Peilwinkel verglichen. Die kleinste Peilwinkeldifferenz kennzeichnet dann die geschätzte Position auf dem gemessenen Peilstrahl mit dem zugehörigen Geschwindigkeitsvektor in Kursrichtung. Zu Beginn der Bestimmung der Zieldaten unterscheiden sich Position und Geschwindigkeitsvektor für jede ermittelte minimale Peilwinkeldifferenz sehr stark, bis sie konvergieren und zurückgerechnet auf eine Startposition auf dem ersten Peilstrahl mit gleichen Werten kommen. Die Konvergenzzeiten sind umso geringer, je besser die für die Rechnung wirksamen Grenzwerte mit den vorgegebenen Grenzwerten für Geschwindigkeit V und Kurs K übereinstimmen.

Die wirksamen Grenzwerte $V^*_{min}$, $V^*_{max}$ für die Geschwindigkeit, die die vorgegebenen Grenzwerte $V_{min}$ und $V_{max}$ einschließen betragen gemäß Fig. 2:

$$V^*_{min} < V < V^*_{max}$$

$$-V_{y\,min} < V < \sqrt{V_{x\,max}{}^2 + V_{max}{}^2}$$

mit

$$V_{ymin} = V_{min} \sin (K_{min} - 90°)$$

und

$$V_{xmax} = V_{max} \cdot \cos (K_{min} - 90°).$$

Die wirksamen Grenzwerte $K^*_{min}$, $K^*_{max}$, die die vorgegebenen Grenzwerte für K einschließen, betragen:

$$K^*_{min} < K < K^*_{max}$$

$$90 + \tan \frac{V_{y\,min}}{V_{x\,max}} < K < 270 - \tan \frac{V_{y\,min}}{V_{x\,max}}$$

Um die in Fig. 2a gezeigten symmetrischen Verhältnisse für die Ermittlung der Randbedingungen aus den Grenzwerten für Geschwindigkeit und Kurs zu erreichen, so dass die Abweichung der durch die Zerlegung in Komponenten wirksamen Grenzen von den vorgegebenen Grenzwerten am geringsten ist, wird das Koordinatensystem um einen Optimierungsdrehwinkel $\alpha$ gemäß Fig. 2b gegen die Nordrichtung N für die Peilung und den Kurs gedreht. Der Optimierungsdrehwinkel $\alpha$ ist abhängig von den Grenzwerten für den Kurs K

$$180 - (K_{max} + K_{min})/2 = \alpha.$$

Im Fall gemäß Fig. 2a ist $\alpha = 0$, da die y-Achse auch die Bezugsrichtung N für die Peilung ist und die Grenzwerte K mit $K_{max}$ und $K_{min}$ symmetrisch zur y-Achse in zwei Quadranten liegen.

Fig. 3 zeigt eine Bestimmung der Randbedingungen aus den Grenzwerten der Geschwindigkeit, wenn die Grenzwerte für den Kurs K im gleichen Quadranten liegen. Die Grenzwerte für den Kurs K sind vorgegeben:

$$90 < K < K_{max},$$

mit

$$K_{max} - K_{min} < 90°.$$

Die Grenzwerte für die Geschwindigkeit V sind vorgegeben:

$$V_{min} < V < V_{max}.$$

Daraus ergeben sich die Randbedingungen zu

$$V_{xmin} < V_x < V_{max}$$

$$-V_{ymax} < V_y < 0$$

wobei

$$V_{xmin} = V_{min} \cos (K_{max} - K_{min})$$

und

$$V_{ymax} = V_{max} \sin (K_{max} - K_{min})$$

Das schraffierte Rechteck gibt das Grenzgebiet an, innerhalb dessen das Ziel die nächste Position unter dem jeweiligen Kurs mit der jeweiligen Geschwindigkeit erreichen kann.

Die wirksamen Grenzwerte $V^*_{min,}V^*_{max}$ für die Geschwindigkeit V betragen

$$V^*_{min} < V < V^*_{max}$$

$$V_{xmin} < V < \sqrt{V_{max}{}^2 + V_{y\,max}{}^2}$$

und für wirksamen Grenzwerte $K^*_{min}$, $K^*_{max}$ für den Kurs K ergeben sich aus:

$$K_{min} < K < 180 - \tan \frac{V_{x\,min}}{V_{y\,max}}$$

Die wirksamen Grenzen schließen die vorgegebenen Grenzwerte für V und K ein.

Fig. 4 zeigt in zeitlich hintereinander liegenden Diagrammen Fig. 4.1 bis Fig. 4.4 den Konvergenzprozess bei der passiven Bestimmung der Zieldaten. Ausgehend von einer Peilung $B_{first}$ gemäß Fig. 4.1 werden die vorgegebenen Grenzwerte für die Entfernung R mit $R_{max}$ und $R_{min}$ auf dem ersten Peilstrahl aufgetragen. Vorgegebene Grenzwerte für den Kurs K sind mit $K_{max}$ und $K_{min}$ sowie vorgegebene Grenzwerte für die Geschwindigkeit V mit $V_{max}$ und $V_{min}$ sind an der maximalen Entfernung $R_{max}$ und der minimalen Entfernung $R_{min}$ als Geschwindigkeitsvektoren angetragen. Das Ziel kann jede Startentfernung zwischen $R_{max}$ und $R_{min}$ mit den vorgegebenen Grenzwerten für V und K einnehmen. Es wird vorausgesetzt, dass das Ziel sich während seiner Fahrt mit konstanter Geschwindigkeit und konstantem Kurs bewegt. Nach mehreren Zeitintervallen und Messungen des Peilwinkels wird zur Zeit $t_1$ gemäß Fig. 4.2 der Peilwinkel $B_1$ gemessen. Die Randbedingungen für die Entfernung und die Geschwindigkeit sind als Positionskomponenten und Geschwindigkeitskomponenten entsprechend den Erläuterungen im Zusammenhang gemäß Fig. 2a und 2b in den Rechenalgorithmus eingegeben. Es wird das Minimum zwischen allen gemessenen Peilwinkeln bis zum Peilwinkel $B_1$ und den geschätzten Peilwinkeln ermittelt und der daraus resultierende Zustandsvektor des Ziels, nämlich Startposition, Geschwindigkeit und Kurs des Ziels geschätzt. Der zugehörige Kurs $K_1$ und die Geschwindigkeit $V_1$ sind in Fig. 4.2 ebenfalls eingetragen sowie die Startposition $R_{01}$ auf dem ersten Peilstrahl. Eine Zielbahn $V_1$ t des Ziels, beginnend beim ersten Peilstrahl unter dem gemessenen Peilwinkel $B_{first}$ , schneidet einen Peilstahlenfächer, der unter allen gemessenen Peilwinkeln aufgespannt ist, und kennzeichnet auf dem Peilstrahl unter dem zuletzt gemessenen Peilwinkel $B_1$ die Zielposition $Z_1$.

Nach einer weiteren Zeit $t_2$ wird gemäß Fig. 4.3 ein letzter Peilwinkel $B_2$ gemessen. Zum Bestimmen der Zielposition $Z_2$ werden die gleichen Randbedingungen für Geschwindigkeit und Entfernung gemäß Fig. 4.1 in den Rechenalgorithmus eingegeben. Bei der jetzt ermittelten Peilwinkeldifferenzen zwischen gemessenen und geschätzten Peilwinkeln wird die Position $Z_2$ und der zugehörige Geschwindigkeitsvektor des Ziels bestimmt. Der zugehörige Kurs $K_2$ und die Geschwindigkeit $V_2$ lassen auf eine Startposition $R_{02}$ schließen. Diese Startposition liegt zwischen $R_{max}$ und $R_{min}$ auf dem ersten Peilstrahl und ist eine andere als die Startposition $R_{01}$ gemäß Fig. 4.2.

Die nächsten Messungen des Peilwinkels einschließlich des letzten Peilwinkels $B_{last}$ zur Zeit $t_3$ bestätigen die Startposition $R_{02}$, die Geschwindigkeit $V_2$ und den Kurswinkel $K_2$, well auch die letzte Zustandsschätzung bei einem Minimum der Peilwinkeldifferenz liegt, die diesem Kurs $K_2$ und dieser Geschwindigkeit $V_2$ zuzuordnen ist. Damit bestätigt sich die Startposition mit $R_{02}$ zwischen $R_{min}$ und $R_{max}$.

Fig. 5 veranschaulicht den geometrischen Zusammenhang der Positionsbestimmung aus den Randbedingungen für die Geschwindigkeitskomponenten und die Entfernungskomponenten. Ausgehend von Fig. 1 hat nach dem Zeitintervall dt das Trägerfahrzeug den Ort II eingenommen. Das Ziel wird unter einem Peilwinkel $B_{last}$ gepeilt. Mit dieser Peilung und dem Peilwinkel $B_{last}$ können die Randbedingungen zum Schätzen der nächsten Zielposition weiter eingeschränkt werden. Zur Zeit $t_0$ wird der Peilwinkel $B_{first}$ gemessen, eine minimale Zielentfernung $R_{min} \leq R$ und ein anlaufender Kurs

$$B_{first} + 90 < K < B_{first} - 90$$

vorgegeben.

Zur Zeit $t_1$ wird der Peilwinkel $B_{last}$ gemessen und damit der Kurswerte eingeschränkt:

$$B_{first} + 90° \leq K < B_{first} + 180° \quad (3)$$

Es werden für die Geschwindigkeit Grenzwerte angenommen

$$0 < V \leq V_{max}, \quad (4),$$

mit denen sich das Ziel bewegt hat, bis es unter dem Peilwinkel $B_{last}$ gepeilt wird. Dazu muss es von einem $R_{max}$ auf dem ersten Peilstrahl $P_{first}$ mit der Geschwindigkeit $V_{max}$ gerade noch den letzten Peilstrahl $P_{last}$ erreichen können. Diese Bedingung, der obere Grenzwert der Geschwindigkeit, führt zu dem Grenzwert $R_{max}$ auf dem ersten Peilstrahl $P_{first}$ und ist als Wegstück $V_{max}$ dt gekennzeichnet. Dieses Wegstück $V_{max}$ dt wird in $Z_{0min}$ angetragen und zum Schnitt mit dem Peilstrahl $P_{last}$ gebracht. Diese Strecke bildet die Begrenzung des maximalen Kurses $K_{max}$, mit dem das Ziel den zweiten Peilstrahl $P_{last}$ mit maximaler Geschwindigkeit $V_{max}$ erreicht:

$$B_{first} + 90° \leq K \leq K_{max} \quad (7).$$

Ein beweglicher Grenzwert für die minimale Geschwindigkeit ergibt sich aus dem Schnittpunkt der Mittelsenkrechten auf den ersten Peilstrahl $P_{first}$ bei $Z_{0min}$ und dem Schnittpunkt mit dem letzten Peilstrahl $P_{last}$, wenn das Ziel mit minimaler Geschwindigkeit $V_{min}$ längs des minimalen Kurswinkels zum Peilstrahl $P_{last}$ fährt. Die Grenzwerte für die Geschwindigkeit werden nunmehr vorgegeben mit:

$$V_{min} \leq V \leq V_{max} \qquad (8).$$

Die Grenzwerte der Geschwindigkeit werden in Geschwindigkeitskomponente $V_x$, $V_y$ umgerechnet und je Koordinate Extremwerte als Randbedingungen für $V_x$ und $V_y$ bestimmt:

$$V_{max} \bullet \sin K_{max} \leq V_x \leq V_{min} \cos K_{min} \qquad (9)$$

$$V_{min} \bullet \sin K_{min} \leq V_y \leq V_{max} \cos K_{max} \qquad (10)$$

Aus den Geschwindigkeitskomponenten $V_x$ und $V_y$ werden durch multiplizieren mit dem Zeitintervall dt Wegkomponenten berechnet. Mit den Wegkomponenten und den Koordinaten der Zielorte $Z_{0min}$ ($minX_0/minY_0$) und $Z_{0max}$ ($maxX_0/maxY_0$) werden Summenkomponenten berechnet und daraus Randbedingungen für die Schätzung der Position des Ziels auf dem letzten Peilstrahl ermittelt.

An den Grenzwerten für die Entfernung R werden Randbedingungen für die Position $Z_0$ des Ziels bestimmt:

$$R_{min} \sin B_{first} \leq X_0 \leq R_{max} \sin B_{first} \quad \text{oder}$$

$$minX_0 \leq X_0 \leq maxX_0$$

$$R_{min} \cos B_{first} \leq Y_0 \leq R_{max} \cos B_{first} \quad \text{oder}$$

$$minY_0 \leq Y_0 \leq maxY_0 \qquad (12)$$

Die mit dem Zeitintervall dt multiplizierten Geschwindigkeitskomponenten gemäß den Ungleichungen (9) und (10) werden in Wegkomponenten umgerechnet aus denen die Zielposition zwischen $Z_{1min}$ ($minX_1/minY_1$) und $Z_{1max}$ ($maxX_1/maxY_1$) geschätzt wird:

$$R_{min} \sin B_{first} - V_{max} \sin K_{max}\, dt \leq X_1 \leq R_{max} \sin B_{first} + V_{min} \cos K_{min}\, dt$$

$$minX_1 \leq X_1 \leq maxX_1 \qquad (13)$$

$$R_{min} \cos B_{first} - V_{max} \cos K_{max}\, dt \leq Y_1 \leq R_{max} \cos B_{first} - V_{max} \cos K_{max}\, dt$$

$$minY_1 \leq Y_1 \leq maxY_1, \qquad (14)$$

die auf dem letzten Peilstrahl $P_{last}$ unter dem letzten gemessenen Peilwinkel $B_{last}$ liegt. Mit diesen Randbedingungen wird erneut die Zielstartposition mittels eines iterativen Prozesses durch Minimieren der Peildifferenzen bestimmt.

Das Minimum gibt die Zielstartposition $Z_0$ und die Geschwindigkeitskomponenten $v_x$ und $v_y$ an, die einen Geschwindigkeitsvektor V in Richtung des Kurses K bestimmen. Bestätigt sich diese Zustandsschätzung mit jeder nächsten Peilwinkelmessung dadurch, dass die zugehörigen Peilwinkeldifferenzen ein Minimum sind, so ist die auf dem letzten Peilstrahl geschätzte Zielposition ebenfalls die wahre Zielposition und der zugehörige Kurs und die zugehörige Geschwindigkeit entsprechend den wahren Zieldaten des Ziels.

Fig. 6 zeigt beispielhaft das Schätzen des zugehörigen Peilwinkels $B_{est}$ und die Minimierung der Peilwinkeldifferenz des gemessenen Peilwinkels $B_{last} = B_{mess}$ und des geschätzten Peilwinkels $B_{est}$, die für alle Messungen $B_{imess}$ des Peilwinkels gleichzeitig mit den gleichen Randbedingungen für die x- und y-Geschwindigkeitskomponenten und x- und y-Positionskomponenten ausgehend von einer Anfangsposition $Z_0$, die innerhalb der Grenzwerte für $R_0$ liegt, durchgeführt wird.

$$(B_{mess} - B_{est}) = min \qquad (15)$$

In dem x-y-Koordinatensystem aus Fig. 1 ist zu einem Zeitpunkt $t_1$ das Trägerfahrzeug mit der Eigenposition $x_E$, $y_E$, im Ursprung des x-y-Koordinatensystems dargestellt. Zu diesem Zeitpunkt befindet sich das Ziel an der Position $Z_{true}$. Es hat seine Anfangs- oder Startposition $Z_0$ bei den Koordinaten $x_{0true}$, $Y_{0true}$, die innerhalb der Randbedingungen für die Startposition min $x_0$/miny$_0$ und max $x_0$/max $y_0$ liegen, mit der Geschwindigkeit $v_{xtrue}$, $v_{ytrue}$, die innerhalb der Randbedingungen für die Geschwindigkeit $v_{xmin}$ und $v_{ymin}$ liegen, verlassen und die Wegkomponenten $v_{xtrue}$ $\Delta t$ und $V_{ytrue}$. $\Delta t$ zurückgelegt. Die neue wahre Position $z_{true}$ des Ziels führt zu der Messung eines Peilwinkels $B_{mess.}$ Die neue Position $Z_{true}$ wird durch eine geschätzte Position $Z_{est}$ und Berechnen des zugehörigen geschätzten Peilwinkels $B_{est}$ iterativ durch Minimieren der Peilwinkeldifferenz zwischen $B_{mess}$ und $B_{est}$ für alle vorgegebenen wirksamen Grenzwerte bestimmt.

Es wird angenommen, dass sich das Ziel von der Koordinate $x_{0true}$ mit einem Wegfehler $\Delta x_0$ zur Koordinate $R_{xest}$ in x-Richtung mit einer Geschwindigkeit $v_x$ und einem Geschwindigkeitskomponentenfehler $\Delta v_x$ in einem Zeitintervall $\Delta t$ bewegt. In y-Richtung hat sich das Ziel während des Zeitintervalls $\Delta t$ von der Koordinate $y_{otrue}$ zur Koordinate $R_{yest}$ mit einem Wegfehler $\Delta y_0$ und einer Geschwindigkeit $v_{yest}$ mit einem Geschwindigkeitskomponentenfehler $\Delta v_y$ bewegt. Die Koordinaten des Ziels werden geschätzt zu:

$$R_{x\,est} = x_{0\,true} + v_x \cdot \Delta t + (\Delta x_0 + \Delta v_x \cdot \Delta t) = R_{x\,true} + \Delta R_x \qquad (A)$$

$$R_{y\,est} = y_{0\,true} + v_y \cdot \Delta t + (\Delta y_0 + \Delta v_y \cdot \Delta t) = R_{y\,true} + \Delta R_y \qquad (B)$$

mit den Fehlern $\Delta R_x$, $\Delta R_y$. Nach Umformung erhält man

$$R_{xtrue} = R_{xest} - \Delta R_x = R_{xest} - (\Delta x_0 + \Delta v_x \cdot \Delta t) \qquad (a)$$

$$R_{ytrue} = R_{yest} - \Delta R_y = R_{yest} - (\Delta y_0 + \Delta v_y \cdot \Delta t) \qquad (b)$$

Daraus wird der geschätzte Peilwinkel $B_{est}$ berechnet:

$$B_{est} = \arctan \frac{R_{xest} - \Delta R_x}{R_{yest} - \Delta R_y} \qquad I$$

Die wahre Position $Z_{true}$ ist bestimmt, wenn die Fehler $\Delta R_x = \Delta x_0 + \Delta v_x . \Delta t$ und $\Delta R_y = \Delta y_0 + \Delta v_y \cdot \Delta t$ gleich Null sind. Dann sind die Geschwindigkeitskomponenten $v_x$ und $v_y$ richtig geschätzt, die zur Einnahme der neuen wahren Position $Z_{true}$ des Ziels geführt haben. Der zugehörige geschätzte Peilwinkel $B_{est}$ ist gleich dem wahren Peilwinkel $B_{true}$ und beträgt:

$$B_{est} = B_{true} = \arctan \frac{x_{0true} + v_{xtrue} \cdot \Delta t - x_E}{y_{0true} + v_{ytrue} \cdot \Delta t - y_E} = B_{mess}$$

Die Zieldaten $P=(x_0, y_0, v_x, v_y)$ sind richtig geschätzt, wenn der Fehlervektor gleich Null ist:

$$\Delta P = (\Delta x_0, \Delta y_0, \Delta v_x, \Delta v_y) = 0 \text{ mit}$$

$$\Delta P_1 = \Delta x_0, \ \Delta p_2 = \Delta y_0, \ \Delta p_3 = \Delta v_x \text{ und } \Delta p_4 = \Delta v_y.$$

Für die Zieldatenbestimmung wird für alle Messungen die Summe der Peilwinkeldifferenzen zwischen den unter den gleichen Grenzwerten für die Anfangsposition, die Geschwindigkeit und den Kurs geschätzten und den gemessenen Peilwinkeln iterativ minimiert:

$$\sum_i (B_{iest} - B_{imess}) = \min \text{ oder } \sum_i (B_{iest} - B_{imess})^2 = \min$$

Die Anfangsposition $Z_0$ und Zielpositionen $Z_{itrue}$ sind dann bis auf einen Restfehler, der durch eine das Minimum bestimmende Schwelle festgelegt wird, bestimmt. Dann ist

$$B_{iest} \approx B_{itrue}$$

Das Einbeziehen einer geschätzten Dopplerfrequenz macht eine Positionsschätzung ohne Eigenmanöver durch gleichzeitiges Minimieren einer Frequenzdifferenz zwischen gemessener Empfangsfrequenz und geschätzter Dopplerfrequenz unter Berücksichtigung der Peilwinkelschätzung gemäß I möglich.

Das Ziel hat die Anfangsposition $Z_0$ mit der Geschwindigkeit v gemäß Fig. 6 verlassen. Bei Kenntnis des wahren Peilwinkels $B_{true}$ werden die Geschwindigkeitskomponenten $v_x$ und $v_y$ des Ziels in eine radiale Geschwindigkeitskomponente $V_R$ umgerechnet, die in die Richtung zwischen der Eigenposition $x_E$, $y_E$ und der wahren Zielposition $P_{true}$ weist.

$$V_R = V_R' + V_R'' = v_y \bullet \cos B_{true} + v_x \sin B_{true} \qquad (1c)$$

Diese radiale Geschwindigkeitskomponente $V_R$ berücksichtigt die vorzeichenrichtig addierten radialen Geschwindigkeitskomponenten des Ziels $V_{RZ}$ und des Trägerfahrzeugs $V_{RE}$

$$V_R = V_{RE} - V_{RZ} \qquad (d)$$

Wegen der radialen Geschwindigkeitskomponente $V_R$ wird eine im Sendesignal oder im Geräusch des Ziels enthaltene und ausgesendete Sendefrequenz $F_{strue}$ frequenzverschoben und eine dopplerbehaftete Sendefrequenz als Empfangsfrequenz $F_{true}$ empfangen, wie im Kapitel 7.4 "Der Dopplereffekt", Seite 334, 335 in dem Lehrbuch "Experimentalphysik I ", 2. Teil, Edgar Lüscher, Hochschultaschenbuch, Bibliographisches Institut, Mannheim. 1967 beschrieben, gilt für die Dopplerfrequenz:

$$F_{true} = F_{strue}\left(\frac{c + V_{RE}}{c + V_{RZ}}\right) = F_{strue}\left[1 - \frac{V_R}{c}\right] \qquad (2c)$$

Die radiale Geschwindigkeitskomponente $V_R$ ist gemäß Gleichungen (1c, 2c) abhängig von der Schallgeschwindigkeit c, den Geschwindigkeitskomponenten in x- und y-Richtung $v_x$ und $v_y$ und vom Peilwinkel $B_{true}$:

Di/e Geschwindigkeitskomponenten $v_x$ und $v_y$ sind gleich der zeitlichen Änderung der x-y-Koordinaten des Ziels:

$$v_x = \frac{dR_{xtrue}}{dt} = \dot{R}_{xtrue}$$

$$v_y = \frac{dR_{ytrue}}{dt} = \dot{R}_{ytrue}$$

Mit den Gleichungen (a) und (b) erhält man:

$$v_x = \dot{R}_{xtrue} = \dot{R}_{xest} - \Delta\dot{R}_x \qquad (e)$$

$$v_y = \dot{R}_{ytrue} = \dot{R}_{yest} - \Delta\dot{R}_y \qquad (f)$$

Unter Hinzuziehung des wahren Peilwinkels $B_{true}$ zwischen der Bezugsrichtung $N_0$ und der Richtung zur wahren Zielposition Ptrue

$$\sin B_{true} = \frac{R_{xtrue}}{R_{true}} \quad (g)$$

$$\cos B_{true} = \frac{R_{ytrue}}{R_{true}} \quad (h)$$

erhält man mit den Gleichungen (a) und (b) für die wahre Entfernung $R_{true}$ zum Ziel

$$R_{true} = \sqrt{R_x{}^2{}_{true} + R_y{}^2{}_{true}}$$

$$R_{true} = \sqrt{(R_{xest} - \Delta R_x)^2 (R_{yest} - \Delta R_y)^2} \quad (i)$$

dabei ist

$$\Delta R_x = \Delta x_0 + \Delta v_x \cdot \Delta t$$

$$\Delta R_y = \Delta y_0 + \Delta v_x \cdot \Delta t\ .$$

In Gleichung (c) für die radiale Geschwindigkeitskomponente $V_R$ werden jetzt die Gleichungen (e), (f), (g) , (h) und (i) eingesetzt, und man erhält für die Dopplerverschiebung in Abhängigkeit vom Fehlervektor $\Delta P = (\Delta x_0, \Delta Y_0, \Delta v_x, \Delta v_y)$:

$$Q(\Delta P) = \frac{v_R}{c} = \frac{1}{c} \frac{(\dot{R}_{xest} - \Delta\dot{R}_x)(R_{xest} - \Delta R_x) + (\dot{R}_{yest} - \Delta\dot{R}_y)(R_{yest} - \Delta R_y)}{\sqrt{(R_{xest} - \Delta R_x)^2 + (R_{yest} - \Delta R_y)^2}}$$

Die Sendefrequenz $F_s$, die vom Ziel abgestrahlt wird, wird mit einem Fehler $\Delta F_s$ geschätzt

$$F_{sest} = F_{strue} + \Delta F_s$$

$$F_{strue} = F_{sest} - \Delta F_s$$

und liefert zusammen mit der Dopplerverschiebung Q die Empfangsfrequenz $F_{mess}$.

Die Dopplerfrequenz $F_{true}$ wird mit einer Fehlerdifferenz $\Delta F$ als Fehler geschätzt.

$$F_{true} = F_{est} - \Delta F$$

Da die Sendefrequenz $F_s$ unbekannt ist, ist der Fehlervektor $\Delta P$ um einen weiteren Fehlerterm $\Delta F_s$ für die Schätzung der Sendefrequenz $F_{sest}$ zu erweitern:

$$\Delta P_1 = (\Delta x_0, \Delta y_0, \Delta v_x, \Delta v_y, \Delta F_s)$$

Dabei ist die geschätzte Dopplerfrequenz $F_{iest}$ gleich der gemessenen Empfangsfrequenz $F_{imess}$ für $\Delta P=0$, wenn nämlich die Sendefrequenz richtig geschätzt wurde.

Man erhält für die geschätzte Dopplerfrequenz $F_{iest}$ eine Summe, die gleich der gemessenen Empfangensfrequenz $F_{imess}$ zuzüglich der Frequenzdifferenz $\Delta F_i$ ist.

$$F_{imess} + \Delta F_i = F_{iest}$$

$$\Delta F_i = F_{imess} - F_{iest}.$$

Zum Bestimmen der Dopplerfrequenz muss die Frequenzdifferenz $\Delta F_i$ minimiert werden.

Die Bestimmung der Zieldaten werden verbessert, für die vom Ziel abgestrahlte Sendefrequenz $F_S$ Grenzwerte vorgegeben werden und dem Algorithmus zugefügt. Die vom Ziel abgestrahlte Sendefrequenz $F_S$ erfährt durch die radiale Geschwindigkeitskomponente $V_R$ zum Trägerfahrzeug seine Dopplerverschiebung und wird als Empfangsfrequenz $F_{mess} = F$ zusammen mit dem ersten Peilwinkel $B_{first}$ gemessen:

$$F = F_s \frac{c + V_{REigen}}{c - V_{RZiel}} \quad (16)$$

Unter Berücksichtigung der Dopplerverschiebung ist die Sendefrequenz $F_s$:

$$F_s = F \frac{c - V_{RZiel}}{c + V_{REigen}} \quad (17).$$

Aus den Grenzwerten für die Geschwindigkeit $V_{min} \leq V \leq V_{max}$ werden Grenzwerte für die Sendefrequenz $F_S$ ermittelt:

$$F \frac{c - V_{max}}{c + V_{REigen}} \leq F_s \leq F \frac{c - V_{min}}{c + V_{REigen}} \qquad (18)$$

Die Grenzwerte für die Sendefrequenz werden bei der Bestimmung des Fehlers $\Delta F_s$ zur Schätzung der Sendefrequenz und somit auch zur Minimierung der Frequenzdifferenz $\Delta F$ zwischen gemessener Empfangsfrequenz $F_{mess}$ und geschätzter Dopplerfrequenz $F_{est}$ berücksichtigt.

Weitere Messunsicherheiten für die Empfangsfrequenz und die Schallgeschwindigkeit c können ebenfalls berücksichtigt werden.

Fig. 7 zeigt ein Blockschaltbild einer Sonar-Empfangsanlage zum Bestimmen der Zieldaten P mit einer adaptiven Filteranordnung zur Auswertung gemessener Peilwinkel $B_{imess}$ und Empfangsfrequenzen $F_{imess}$. Empfangssignale einer Wandleranordnung 10 werden in einem Richtungsbildner 11 durch Laufzeit- oder Phasenkompensation zu Gruppensignalen zusammengefasst und ein Ziel unter einem Peilwinkel $B_{imess}$ mit einer Messschaltung 12 detektiert. Die Messschaltung 12 wird von einer Steuerschaltung 13 im Abstand von Zeitintervallen $\Delta t_i$ angesteuert. Die gesamte Signalverarbeitung erfolgt im Abstand der Zeitintervalle $\Delta t$. Eine Schätzschaltung 15 erhält als Eingangsdaten die Nordrichtung aus einer Kompasseinrichtung 16 als Bezugsrichtung $N_0$, die Eigenposition $x_E$, $y_E$ der Wandleranordnung 10 aus einer an Bord befindlichen Navigationsanlage 17 und aus einer Startzustandsschaltung 18 Randbedingungen für die Positionsschätzung, die aus Grenzwerten für die Entfernung R, die Geschwindigkeit V, und den Kurs K des Ziels ermittelt werden. Aus dem zuletzt gemessenen Peilwinkel $B_{first}$ und dem Grenzwert für die Entfernung R werden die Randbedingungen für die Positionskomponenten $x_0$ /$y_0$ bestimmt:

$$R_{min} \sin B_{first} \leq X_0 \leq R_{max} \sin B_{first}$$

$$\min X_0 \leq X_0 \leq \max X_0$$

$$R_{min} \cos B_{first} \leq Y_0 \leq R_{max} \cos B_{first}$$

$$\min Y_0 \leq Y_0 \leq \max Y_0$$

Aus den vorgegebenen Grenzwerten für die Geschwindigkeit V und den Kurs K werden die Randbedingungen für die Geschwindigkeitskomponenten $V_x$ / $V_y$ bestimmt:

$$V_{xmin} \leq V_x \leq V_{xmax}$$

$$V_{ymin} \leq V_y \leq V_{ymax},$$

wie es im Zusammenhang mit Fig. 2 und 3 für die Fälle

$$90 < |K_{max} - K_{min}| < 180 \text{ und } |K_{max} - K_{min}| < 90$$

erläutert wurde.

Die geschätzte Sendefrequenz $F_s$ und die Grenzwerte

$$F \frac{c - V_{max}}{c + V_{REigen}} \leq F_s \leq F \frac{c - V_{min}}{c + V_{REigen}}$$

werden in einer Frequenzschaltung 19 ermittelt, die eingangsseitig mit der Startzustandsschaltung 18 verbunden ist. Die Gruppensignale am Ausgang des Richtungsbildners 11 werden in einer Frequenzanalyse-Schaltung 24 analysiert. Die ermittelte Empfangsfrequenz wird der Frequenzschaltung 19 und einer Differenzschaltung 23 zugeführt.

Die Startzustandsschaltung 18 liefert Positionskomponenten $x_i$ und $y_i$, Geschwindigkeitskomponenten $v_{ix}$ und $v_{iy}$ in x- und y-Richtung, die Frequenzschaltung 19 Sendefrequenzen $F_s$, eine Fehlerschätzanordnung 20 einen Fehlervektor $\Delta P_0 = (\Delta_{x0}, \Delta_{y0}, \Delta_{vx}, \Delta_{vy}, \Delta F_s)$. Aus diesen Eingangsdaten werden in der Schätzschaltung 15 entsprechend den Schätzgleichungen (A) und (B) Wegkomponenten $R_{xiest}$, $R_{yiest}$ und Wegfehler $\Delta R_{xi}$, $\Delta R_{yi}$ einer geschätzten Position geschätzt. Aus den geschätzten Wegkomponenten $R_{xiest}$, $R_{yiest}$ und ihren zeitlichen Änderungen $R_{xiest}$ und $R_{yiest}$ sowie den Fehlern $\Delta R_{xi}$, $\Delta R_{yi}$ und $\Delta R_{xi}$ und $\Delta R_{yi}$ wird die Frequenzdifferenz $AF_i$ innerhalb der Grenzen für die Sendefrequenz ermittelt, die die Frequenzschaltung 19 vorgibt. Aus diesen Schätzwerten innerhalb der Grenzwerte werden in einer Arcustangensschaltung 21 geschätzte Peilwinkel $B_{iest}$ gemäß Gleichung I berechnet.

der Differenzschaltung 23, die der Messschaltung 12, der Schätzschaltung 15 und der Frequenzanalyseschaltung 24 nachgeordnet ist, werden innerhalb der vorgegeben Grenzwerte Peilwinkeldifferenzen und Frequenzdifferenzen ermittelt.

Über $i = I_k$ Messungen je Eigenleg, deren Zahl $I_k$ in einer Steuerschaltung 60 vorgegeben wird, werden die gemessenen und geschätzten Peilwinkel $B_{imess}$ und $B_{iest}$ ausgewertet. Die Zeitdauer $I_k \bullet \Delta t$ gibt die Filterlänge an.

Die Startzustandsschaltung 18 bestimmt aus den Grenzwerten für den Kurs einen Optimierungsdrehwinkel $\alpha$, wie es im Zusammenhang mit Fig. 2b erläutert wurde. Dieser Optimierungsdrehwinkel $\alpha$ wird bei der Bestimmung der Randbedingungen für die Geschwindigkeitskomponenten und auch bei der Schätzung der Position in der Schätzschaltung 15 berücksichtigt.

Die Ausgänge der Differenzschaltung 23 sind mit einer Iterationsschaltung 30 verbunden, in der iterativ das Minimum der Summe aus Peilwinkeldifferenz und Frequenzdifferenz oder ihrer quadrierten Differenzwerte gebildet wird. Die Minimierung wird solange durchgeführt, bis der Fehlervektor $\Delta P_1$ eine untere Schwelle $\Delta P_1$ kleiner gleich $\Delta P_{min}$ unterschreitet.

Zu jedem gemessenen Peilwinkel $B_{imess}$ werden in der Schätzschaltung 15 Wegkomponenten $R_{xest}$ und $R_{yest}$ sowie Wegfehler $\Delta R_x$ und $\Delta R_y$ innerhalb der Grenzwerte für die Entfernung, die Geschwindigkeit und den Kurs und die Sendefrequenz solange ermittelt, bis der Fehlervektor $\Delta P_1$ eine untere Schwelle $\Delta P_1 \leq \Delta P_{min}$ unterschreitet und die Zieldaten auf einen Wert konvergiert sind. Bis auf einen durch die Schwelle festgelegten Restfehler sind dann der geschätzte Peilwinkel $B_{est}$ gleich dem wahren gemessenen Peilwinkel $B_{true}$ und die geschätzten Weg- und Geschwindigkeitskomponenten $R_{xest}$, $R_{yest}$, $V_{xest}$, $V_{yest}$ gleich den wahren Weg- und Geschwindigkeitskomponenten $R_{ytrue}$, $R_{ytrue}$, $V_{xtrue}$, $V_{ytrue}$ und die geschätzte Dopplerfrequenz $F_{iest}$ gleich der empfangenen, wahren Dopplerfrequenz $F_{true}$. Die dafür eingesetzte Schwellenschaltung 31 ist der Iterationsschaltung 30 nachgeschaltet und steuert die Fehlerschätzanordnung 20 an. Bei Unterschreiten der Schwelle $\Delta P_{min}$ werden die Zieldaten P in einer Anzeige 100 dargestellt.

Fig. 8 und 9 zeigen Ergebnisse zur Bewertung des erfindungsgemäßen Verfahrens. Als Grenzen werden für ein anlaufendes Ziel vorgegeben:

$$1\ km \leq R \leq 60\ km$$

$$100° \leq K \leq 260°$$

$$0\ m/s \leq V \leq 10\ m/s$$

Unter den Diagrammen sind die Länge L des Eigenlegs in (m), die Geschwindigkeit V in (kn) und der Kurs K in (Grad) des Trägerfahrzeugs angegeben.

Fig. 8 zeigt die Konvergenz des Verfahrens für den Fall, dass sich das Ziel unter einem ersten Peilwinkel von $B_{first} = 0°$ und einer Anfangsentfernung von 30 Kilometern befindet. Das Ziel fährt mit einer Geschwindigkeit von 10 kn auf einem Kurs von K = 170°. Horizontal ist die Messzeit angegeben, vertikal der jeweilige Fehler im oberen Diagramm für den Kurs, im mittleren Diagramm für die Entfernung, im unteren Diagramm für die Geschwindigkeit. Man sieht, dass der Kurs nach 10 min anfängt zu konvergieren und nach ca. 20 min der Kursfehler $\Delta K < \pm 5°$ ist, während beim herkömmlichen Verfahren dieser Wert erst nach 30 min erreicht wird. Die Entfernungsschätzung zeigt bereits nach 12 min einen Fehler, der kleiner als 10% ist, und nach 16 min kleiner als 5%. Die Geschwindigkeitsschätzung beginnt nach 11 min zu konvergieren. Nach 20 min weist die Schätzung einen Fehler von $\Delta V = \pm 1{,}5$ m/s auf. Die Zieldatenschätzung erfolgte ohne Frequenzanalyse und Bestimmen einer Empfangsfrequenz, so dass Grenzwerte für die Sendefrequenz nicht verwendet werden.

Fig. 9 zeigt die Fehler über der Zeit für ein Ziel, das sich zu Beginn der Messungen unter $B_{first} = 0°$ in und einer Anfangsentfernung von 20 km befindet. Das Ziel fährt mit einer Geschwindigkeit von 10 kn auf einem Kurs vom 180°. Der Kursfehler ist bereits nach 11 min kleiner als 5°, der Entfernungsfehler liegt nach 11 min unter 10% und nach 16 min unter 5%. Die Geschwindigkeitsschätzung beginnt bereits nach 7 min zu konvergieren. Nach 20 min ist der Fehler kleiner als 1 m/s.

Vergleicht man diese Ergebnisse mit einer Schätzung der Zieldaten ohne Grenzwerte, so stellt man fest, dass die Konvergenzzeiten wesentlich kürzer sind, und noch sinken, wenn auch die Dopplerverschiebung einer in Grenzen vorgegebenen Sendefrequenz durch Vergleich mit einer gemessenen Empfangsfrequenz zur Minimierung der Peilwinkel-und Frequenzdifferenz nach dem Least-Square-Algorithmus verwendet wird.

## Patentansprüche

1. Verfahren zum passiven Bestimmen von Zieldaten durch richtungsselektiven Empfang von Schallwellen, die vom Ziel abgestrahlt oder gesendet werden, mit einer elektroakustischen Wandleranordnung einer Sonar-Empfangsanlage auf einem Trägerfahrzeug aus geschätzten Peilwinkeln, die aus geschätzten Positionen des Ziels ermittelt werden, und gemessenen Peilwinkeln, wobei die Peilwinkeldifferenz zwischen gemessenen und geschätzten Peilwinkeln iterativ minimiert wird, **dadurch gekennzeichnet, dass** Grenzwerte für die Entfernung und/oder den Kurs und/oder die Geschwindigkeit des Ziels zum Ermitteln von Randbedingungen vorgegeben werden, dass auf einem Peilstrahl unter einem gemessenen Peilwinkel mit den Randbedingungen Positionskomponenten und Geschwindigkeitskomponenten zum Schätzen der Position des Ziels bestimmt und zur Minimierung der Peilwinkeldifferenz in einem nicht rekursiven, iterativen Rechenverfahren verwendet werden.

2. Verfahren nach Anspruch 1, **dadurch gekennzeichnet, dass** die Grenzwerte für den Kurs kleiner oder gleich dem rechten Winkel rechts und links zum Peilstrahl des gemessenen Peilwinkels gewählt werden.

3. Verfahren nach einem der Ansprüche 1 oder 2 **dadurch gekennzeichnet, dass** die zeitliche Änderung von gemessenen Peilwinkeln und die Änderungsrichtung bestimmt werden, dass der eine Grenzwert des Kurses durch den gemessenen Peilstrahl und der andere Grenzwert durch einen rechten Winkel in Änderungsrichtung festgelegt wird, dass bei negativer Änderungsrichtung der Kurs links, bei positiver Änderungsrichtung rechts vom Peilstrahl liegt.

4. Verfahren nach einem der Ansprüche 1 bis 3, **dadurch gekennzeichnet, dass** auf dem ersten Peilstrahl des ersten gemessenen Peilwinkels mindestens eine Minimalentfernung als ein Grenzwert für die Entfernung und ein anlaufender Kurs senkrecht zum ersten Peilstrahl als ein Grenzwert des Kurses vorgegeben werden und dass nach einem Zeitintervall ein letzter Peilwinkel gemessen wird, und dass der obere Grenzwert der Entfernung und/oder der Geschwindigkeit durch das Lot auf den letzten Peilstrahl unter Berücksichtigung des Zeitintervalls eingestellt wird.

5. Verfahren nach einem der Ansprüche 1 bis 4, **dadurch gekennzeichnet, dass** auf dem ersten Peilstrahl des ersten gemessenen Peilwinkels mindestens eine Maximalentfernung als ein Grenzwert für die Entfernung und ein anlaufender Kurs senkrecht zum ersten Peilstrahl als ein Grenzwinkel des Kurses vorgegeben wird und dass nach einem Zeitintervall ein letzter Peilwinkel gemessen wird, dass der untere Grenzwert der Entfernung und/oder der Geschwindigkeit durch die Senkrechte auf den letzten Peilstrahl und die Strecke bis zum Schnittpunkt mit dem ersten Peilstrahl unter Berücksichtigung des Zeitintervalls eingestellt wird.

6. Verfahren nach einem der Ansprüche 4 und 5, **dadurch gekennzeichnet, dass** vom unteren Grenzwert der Entfernung auf dem ersten Peilstrahl ein Wegstück, welches dem oberen Grenzwert der Geschwindigkeit unter Berücksichtigung des Zeitintervalls entspricht, angetragen wird und dass der Schnittpunkt mit dem letzten Peilstrahl den zweiten Grenzwert für den Kurs eines anlaufenden Ziels liefert.

7. Verfahren nach einem der Ansprüche 1 bis 4, **dadurch gekennzeichnet, dass** zum Bestimmen der Randbedingungen für die Positionskomponenten die Grenzwerte für die Entfernung in orthogonale Positionskomponenten und die Grenzwerte für die Geschwindigkeit für alle Kurswinkel innerhalb der Grenzwerte für den Kurs in orthogonale x-y-Geschwindigkeitskomponenten in einem kartesischen Koordinatensystem zerlegt werden, dass die minimale und maximale x-Geschwindigkeitskomponente und die minimale und maximale y-Geschwindigkeitskomponente bestimmt werden, die die Randbedingungen für die Geschwindigkeitskomponenten zum Schätzen der Position des Ziels und seiner Geschwindigkeit innerhalb der Grenzwerte für die Entfernung bilden.

**8.** Verfahren nach einem der Ansprüche 1 bis 4, **dadurch gekennzeichnet, dass** die minimale und maximale x-Geschwindigkeitskomponente und die minimale und maximale y-Geschwindigkeitskomponente ein Grenzgebiet aufspannen, dass aus der maximalen x-Geschwindigkeitskomponente und der maximalen y-Geschwindigkeitskomponente ein wirksamer oberer Grenzwert und aus der minimalen x-Geschwindigkeitskomponente und der minimalen y-Geschwindigkeitskomponente ein wirksamer unterer Grenzwert für die Geschwindigkeit ermittelt werden und dass aus den Eckwerten des Grenzgebiets ein wirksamer unterer Grenzwert und ein wirksamer oberer Grenzwert für den Kurs bestimmt wird, die dem Schätzen der Position des Ziels und seiner Geschwindigkeit zugrundegelegt werden.

**9.** Verfahren nach einem der Ansprüche 4 bis 6, **dadurch gekennzeichnet, dass** aus den Grenzwerten für Geschwindigkeit und Kurs orthogonale Geschwindigkeitskomponenten und je Richtung Maximum und Minimum dieser Geschwindigkeitskomponenten bestimmt werden, die unter Berücksichtigung des Zeitintervalls in Wegkomponenten umgerechnet werden, dass zu sämtlichen Positionskomponenten zwischen dem oberen und unteren Grenzwerte der Entfernung die Minima und Maxima der Wegkomponenten addiert werden, dass mit diesen Summenkomponenten Positionen geschätzt und zugehörige geschätzte Peilwinkel ermittelt werden und dass die Peilwinkeldifferenz oder quadrierte Peilwinkeldifferenz zwischen geschätzten und gemessenen Peilwinkeln iterativ minimiert wird, wobei die bei Erreichen des Minimums geschätzte Position die Entfernung auf dem zuletzt gemessenen Peilwinkel gehörenden Peilstrahl sowie Kurs und Geschwindigkeit des Ziels liefern.

**10.** Verfahren nach einem der Ansprüche 7 bis 9, **dadurch gekennzeichnet, dass** das kartesische Koordinatensystem gegenüber dem Bezugssystem für die Peilung um einen vorgebbaren Optimierungsdrehwinkel gedreht wird, dass der Optimierungsdrehwinkel abhängig von der Differenz des durch die Grenzwerte des Kurses bestimmten maximalen und minimalen Kurswinkel vorgegeben wird.

**11.** Verfahren nach Anspruch 10, **dadurch gekennzeichnet, dass** zu einem vorgegebenen anlaufenden Kurs, dessen Grenzwerte eine Kurswinkeldifferenz kleiner 90° einschließen, der Optimierungsdrehwinkel gleich der Differenz von 90° abzüglich dem minimalen Kurswinkel ist.

**12.** Verfahren nach Anspruch 10, **dadurch gekennzeichnet, dass** zu einem vorgegebenen anlaufenden Kurs, dessen Grenzwerte eine Kurswinkeldifferenz von mindestens 90° und höchstens 180° aufweist, der Optimierungsdrehwinkel gleich der Differenz von 180° abzüglich der halben Kurswinkelsumme ist.

**13.** Verfahren nach Anspruch 1 oder 2 und 10, **dadurch gekennzeichnet, dass** für einen Kurs, dessen Grenzwerte eine Kurswinkeldifferenz größer 180° einschließen, der Optimierungsdrehwinkel gleich dem negativen gemessenen Peilwinkel ist.

**14.** Verfahren nach einem der Ansprüche 1 bis 7, wobei die unter dem Peilwinkel empfangenen Schallwellen einer Frequenzanalyse unterzogen werden und die Frequenz mindestens einer Spektrallinie als Empfangsfrequenz bestimmt wird, und eine Frequenzdifferenz der Empfangsfrequenz von einer geschätzten Dopplerfrequenz ermittelt wird, dass die geschätzte Dopplerfrequenz aus einer geschätzten vom Ziel abgestrahlten Sendefrequenz und einer Dopplerverschiebung aus geschätzten Zielpositionen, die zur Ermittlung des geschätzten Peilwinkels herangezogen werden, und deren zeitlichen Änderungen in Peilrichtung bestimmt wird, **dadurch gekennzeichnet, dass** Grenzwerte der geschätzten Sendefrequenz aus der gemessenen Empfangsfrequenz und Dopplerverschiebungen für die vorgegebenen Grenzwerte der Geschwindigkeit ermittelt werden, dass mit den Grenzwerten der geschätzten Sendefrequenz Grenzwerte der geschätzten Dopplerfrequenz bestimmt werden und von der gemessenen Empfangsfrequenz abgezogen eine Differenzfrequenz liefern, dass das Minimum der Summe aus Peilwinkeldifferenz und Frequenzdifferenz oder ihrer quadrierten Differenzwerte iterativ bestimmt wird, wobei die bei Erreichen des Minimums geschätzte Position die Zieldaten liefert.

**15.** Verfahren nach einem oder mehreren der Ansprüche 1 bis 13, **dadurch gekennzeichnet, dass** aus den dem Minimum der Peilwinkeldifferenz zugrundegelegten Randbedingungen die Geschwindigkeit und der Kurs des Ziels für alle Peilwinkelmessungen bestimmt und miteinander verglichen werden, dass bei Gleichheit über mehrere Peilwinkelmessungen die Bestimmung der Geschwindigkeit und des Kurses konvergieren und die daraus bestimmte Position auf dem ersten Peilstrahl die wahre Startposition des Ziels ist.

## Claims

1. Method for passive definition of target data by directional reception of sound waves which are emitted or transmitted from the target, having an electroacoustic transducer arrangement of a sonar receiving installation on a carrier vehicle, from estimated bearing angles which are determined from estimated positions of the target, and measured bearing angles, with the bearing angle difference between the measured and the estimated bearing angles being minimized iteratively, **characterized in that** limit values are predetermined for the range and/or the track and/or the speed of the target in order to determine constraints, **in that** position components and velocity components are defined on a direction-finding beam at a measured bearing angle, subject to the constraints, in order to estimate the position of the target, and are used in a non-recursive, iterative computation method in order to minimize the bearing angle difference.

2. Method according to Claim 1, **characterized in that** the track limit values are chosen to be less than or equal to a right angle to the right and left of the direction-finding beam of the measured bearing angle.

3. Method according to one of Claims 1 or 2, **characterized in that** the rate of change of the measured bearing angles and the direction of the change are determined, **in that** one limit value for the track is defined by the measured direction-finding beam, and the other limit value is defined by a right angle in the direction of the change, **in that** the track is to the left of the direction-finding beam if the direction of the change is negative, and is to the right of it if the direction of the change is positive.

4. Method according to one of Claims 1 to 3, **characterized in that** at least one minimum range is predetermined as a limit value for the range, and a continuous track at right angles to the first direction-finding beam is predetermined as a limit value for the track, on the first direction-finding beam of the first measured bearing angle, and **in that** a last bearing angle is measured after a time interval, and **in that** the upper limit value for the range and/or the velocity are/is set by the perpendicular to the last direction-finding beam, taking into account the time interval.

5. Method according to one of Claims 1 to 4, **characterized in that** at least one maximum range is predetermined as a limit value for the range, and a continuous track at right angles to the first direction-finding beam is predetermined as a limit angle for the track, on the first direction-finding beam of the first measured bearing angle, and **in that** a last bearing angle is measured after a time interval, **in that** the lower limit value of the range and/or the velocity are/is selected by the perpendicular to the last direction-finding beam and the distance to the intersection with the first direction-finding beam, taking into account the time interval.

6. Method according to one of Claims 4 and 5, **characterized in that** the distance travelled, which corresponds to the upper limit value of the velocity taking into account the time interval, is plotted from the lower limit value of the range on the first direction-finding beam, and **in that** the intersection with the last direction-finding beam provides the second limit value for the track of an approaching target.

7. Method according to one of Claims 1 to 4, **characterized in that**, in order to define the constraints for the position components, the limit values for the range are broken down into orthogonal position components, and the limit values for the velocity are broken down for all the track angles within the limit values for the track into orthogonal x-y velocity components, using a Cartesian coordinate system, **in that** the minimum and maximum x-velocity components and the minimum and maximum y-velocity components are defined which form the constraints for the velocity components for estimation of the position of the target and its velocity within the limit values for the range.

8. Method according to one of Claims 1 to 4, **characterized in that** the minimum and maximum x-velocity components and the minimum and maximum y-velocity components cover a limit region, **in that** an effective upper limit value is determined from the maximum x-velocity component and the maximum y-velocity component, and an effective lower limit for the velocity is determined from the minimum x-velocity component and the minimum y-velocity component, and **in that** an effective lower limit value and an effective upper limit value for the track are defined from the cut-off values of the limit region and are used as the basis for estimation of the position of the target, and its velocity.

**9.** Method according to one of Claims 4 to 6, **characterized in that** orthogonal velocity components and a maximum and minimum of these velocity components in each direction are defined from the limit values for the velocity and track, and are converted to distance components taking into account the time interval, **in that** the minimum and maximum of the distance components are added to all of the position components between the upper and lower limit values of the range, **in that** these sum components are used to estimate positions and to determine associated estimated bearing angles, and **in that** the bearing-angle difference or the square of the bearing-angle difference between the estimated and the measured bearing angles is minimized iteratively, with the position estimated on reaching the minimum providing the range on the direction-finding beam associated with the most recently measured bearing angle, as well as the track and velocity of the target.

**10.** Method according to one of Claims 7 to 9, **characterized in that** the Cartesian coordinate system is rotated with respect to the reference system through a predeterminable optimization rotation angle for direction finding, **in that** the optimization rotation angle is predetermined as a function of the difference between the maximum and minimum track angles defined by the limit values of the track.

**11.** Method according to Claim 10, **characterized in that**, for a predetermined approaching track whose limit values include a track angle difference of less than 90°, the optimization rotation angle is equal to the difference from 90° minus the minimum track angle.

**12.** Method according to Claim 10, **characterized in that**, for a predetermined approaching track whose limit values have a track angle difference of at least 90° and at most 180°, the optimization rotation angle is equal to the difference from 180° minus half the track angle sum.

**13.** Method according to Claim 1 or 2 and 10, **characterized in that**, for a track whose limit values include a track angle difference of more than 180°, the optimization rotation angle is equal to the negative measured bearing angle.

**14.** Method according to one of Claims 1 to 7, with the sound waves received at the bearing angle being subjected to a frequency analysis, and with the frequency of at least one spectral line being defined as the received frequency, and with any frequency difference between the received frequency and an estimated Doppler frequency being determined, in that the estimated Doppler frequency is determined from an estimated transmission frequency emitted from the target and from a Doppler shift from estimated target positions, which are used to determine the estimated bearing angle, and their rates of change in the bearing direction, **characterized in that** limit values are determined for the estimated transmission frequency from the measured received frequency and Doppler shifts for the predetermined limit values of the velocity, **in that** the limit values of the estimated transmission frequency are used to define limit values for the estimated Doppler frequency, and, subtracted from the measured received frequency, produce a difference frequency, **in that** the minimum of the sum of the bearing-angle difference and the frequency difference or the squares of their difference values is or are determined iteratively, with the position estimated on reaching the minimum providing the target data.

**15.** Method according to one or more of Claims 1 to 13, **characterized in that** the velocity and the track of the target are defined for all bearing angle measurements from the constraints on which the minimum of the bearing-angle difference is based, and are compared with one another, **in that**, in the event of equality over a plurality of bearing-angle measurements, the definition of the velocity and of the track converge, and the position determined from this on the first direction-finding beam is the true initial position of the target.

## Revendications

**1.** Procédé pour déterminer passivement les données d'une cible par réception sélective de direction des ondes sonores qui sont émises et diffusées par la cible, grâce au montage du transducteur électroacoustique d'un récepteur sonar sur un véhicule porteur, à partir des angles de relèvement estimatifs calculés à partir des positions estimatives de la cible, et des angles de relèvement mesurés, dans lequel la différence entre les angles de relèvement mesurés et estimés est réduite au strict minimum de manière itérative, **caractérisé en ce que** les valeurs limites d'éloignement et/ou du cap et/ou de vitesse de la cible sont prédéfinies pour calculer les conditions aux limites, **en ce que** sur un faisceau radiogoniométrique sous un angle de relèvement mesuré, les composants de position et les composants de vitesse sont déterminés grâce aux conditions aux limites pour estimer la position de la cible et utilisés dans un mode de calcul itératif non récursif pour réduire au strict minimum la différence des angles de relèvement.

2. Procédé selon la revendication 1 **caractérisé en ce que** les valeurs limites du cap, inférieures ou égales à l'angle droit, sont choisies à droite et à gauche du faisceau radiogoniométrique de l'angle de relèvement mesuré.

3. Procédé selon l'une quelconque des revendications 1 ou 2 **caractérisé en ce que** la modification temporelle des angles de relèvement mesurés et la direction de la modification sont déterminées, **en ce que** l'une des valeurs limites est fixée par le faisceau radiogoniométrique mesuré et l'autre par un angle droit dans la direction de la modification, **en ce qu'**en cas de direction de la modification négative, le cap est à gauche du faisceau, en cas de direction de la modification positive, à droite.

4. Procédé selon l'une quelconque des revendications 1 à 3 **caractérisé en ce que**, sur le premier faisceau radiogoniométrique du premier angle de relèvement mesuré, au moins un éloignement minimal est prédéfini comme valeur limite d'éloignement et un cap en temps réel perpendiculaire au premier faisceau radiogoniométrique est prédéfini comme valeur limite du cap et **en ce qu'**un dernier angle de relèvement est mesuré après un intervalle de temps et **en ce que** la valeur limite supérieure d'éloignement et/ou de vitesse est adaptée, par la verticale, au dernier faisceau radiogoniométrique en tenant compte de l'intervalle de temps.

5. Procédé selon l'une quelconque des revendications 1 à 4 **caractérisé en ce que**, sur le premier faisceau radiogoniométrique du premier angle de relèvement mesuré, au moins un éloignement maximal est prédéfini comme valeur limite d'éloignement et un cap en temps réel perpendiculaire au premier faisceau radiogoniométrique, comme angle critique de cap et **en ce qu'**un dernier angle de relèvement est mesuré après un intervalle de temps, **en ce que** la valeur limite inférieure d'éloignement et/ou de vitesse est adaptée, par la perpendiculaire, au dernier faisceau radiogoniométrique et à la distance jusqu'au point d'intersection avec le premier faisceau radiogoniométrique en tenant compte de l'intervalle de temps.

6. Procédé selon l'une quelconque des revendications 4 et 5 **caractérisé en ce qu'**une unité de déplacement, laquelle correspond à la valeur limite supérieure de vitesse en tenant compte de l'intervalle de temps, est requise par la valeur limite inférieure d'éloignement sur le premier faisceau radiogoniométrique et **en ce que** le point d'intersection avec le dernier faisceau radiogoniométrique fournit la deuxième valeur limite du cap d'une cible en temps réel.

7. Procédé selon l'une quelconque des revendications 1 à 4 **caractérisé en ce que** pour déterminer les conditions aux limites des composants de position, les valeurs limites d'éloignement sont fractionnées dans un système de coordonnées cartésien en composants de position orthogonaux et les valeurs limites de vitesse pour tous les angles de route à l'intérieur des valeurs limites du cap, en composants de vitesse orthogonaux x-y, **en ce que** le composant de vitesse minimal et maximal x et le composant de vitesse minimal et maximal y qui constituent les conditions aux limites des composants de vitesse pour estimer la position de la cible et sa vitesse à l'intérieur des valeurs limites d'éloignement, sont déterminés.

8. Procédé selon l'une quelconque des revendications 1 à 4 **caractérisé en ce que** le composant de vitesse minimal et maximal x et le composant de vitesse minimal et maximal y définissent une zone limite, **en ce qu'**une valeur limite supérieure efficace est calculée à partir du composant de vitesse maximal x et du composant de vitesse maximal y et qu'une valeur limite inférieure efficace de vitesse est calculée à partir du composant de vitesse minimal x et du composant de vitesse minimal y et **en ce qu'**une valeur limite inférieure efficace et une valeur limite supérieure efficace du cap qui se basent sur l'évaluation de la position de la cible et de sa vitesse est déterminée à partir des valeurs d'angle de la zone limite.

9. Procédé selon l'une quelconque des revendications 4 à 6 **caractérisé en ce que** des composants de vitesse orthogonaux et, selon la direction, le maximum et le minimum de ces composants de vitesse qui sont transformés en composants de déplacement en tenant compte de l'intervalle de temps sont déterminés à partir des valeurs limites de vitesse et de cap, **en ce que** les minima et maxima des composants de déplacement sont ajoutés à l'ensemble des composants de position entre les valeurs limites supérieure et inférieure d'éloignement, **en ce que** des positions sont estimées grâce à ces composants cumulés, et les angles de relèvement estimés correspondants sont calculés et **en ce que** la différence des angles de relèvement ou la différence des angles de relèvement élevée au carré entre des angles de relèvement estimés et mesurés est réduite au strict minimum de manière itérative, dans lequel la position estimée une fois le minimum atteint fournit l'éloignement jusqu'au faisceau radiogoniométrique correspondant à l'angle de relèvement mesuré en dernier ainsi que le cap et la vitesse de la cible.

10. Procédé selon l'une quelconque des revendications 7 à 9 **caractérisé en ce que** le système de coordonnées cartésien par rapport au système de référence concernant le relèvement est mis en rotation autour d'un angle de rotation optimisé pouvant être prédéfini, **en ce que** l'angle de rotation optimisé est prédéfini en fonction de la différence des angles du cap maximal et minimal déterminé par les valeurs limites du cap.

**11.** Procédé selon la revendication 10 **caractérisé en ce que** pour un cap en temps réel prédéfini dont les valeurs limites impliquent une différence d'angles de cap inférieure à 90°, l'angle de rotation optimisé est égal à la différence de 90° moins l'angle de cap minimal.

**12.** Procédé selon la revendication 10 **caractérisé en ce que** pour un cap en temps réel prédéfini dont les valeurs limites présentent une différence des angles de cap d'au moins 90° et de 180° au maximum, l'angle de rotation optimisé est égal à la différence de 180° moins la moitié de la somme de l'angle de cap.

**13.** Procédé selon la revendication 1 ou 2 et 10 **caractérisé en ce que** pour un cap dont les valeurs limites impliquent une différence des angles de cap supérieure à 180°, l'angle de rotation optimisé est égal à l'angle de relèvement négatif mesuré.

**14.** Procédé selon les revendications 1 à 7, les ondes sonores reçues sous l'angle de relèvement étant soumises à une analyse de fréquence et la fréquence au moins d'une raie spectrale est déterminée comme fréquence de réception, et dans lequel une différence de fréquence de réception est calculée par une fréquence Doppler estimée, **caractérisé en ce que** la fréquence Doppler estimée provenant d'une fréquence d'émission estimée émise par la cible et d'un déplacement Doppler provenant des positions estimées de la cible qui sont utilisées pour calculer l'angle de relèvement estimé et ses modifications temporelles est déterminée dans la direction de relèvement, **caractérisé en ce que** les valeurs limites de la fréquence d'émission estimée provenant de la fréquence de réception et les déplacements Doppler mesurés sont calculés pour les valeurs limites de vitesse prédéfinies, **en ce que**, grâce aux valeurs limites de la fréquence d'émission estimée, les valeurs limites de la fréquence Doppler estimée sont déterminées et fournissent une fréquence de différence en déduisant la fréquence de réception mesurée, **en ce que** le minimum de la somme est déterminée de manière itérative à partir de la différence des angles de relèvement et de la différence de fréquence ou leurs valeurs de différence élevées au carré, dans lequel la position estimée une fois le minimum atteint fournit les données de la cible.

**15.** Procédé selon l'une ou plusieurs quelconque des revendications 1 à 13 **caractérisé en ce que** la vitesse et le cap de la cible sont déterminés pour toutes les mesures d'angles de relèvement à partir des conditions aux limites se basant sur le minimum de la différence des angles de relèvement et comparés les uns aux autres, **en ce qu'**en cas d'égalité de plusieurs mesures des angles de relèvement, la détermination de la vitesse et du cap convergent et la position sur le faisceau radiogoniométrique déterminée par là est la vraie position de départ de la cible.

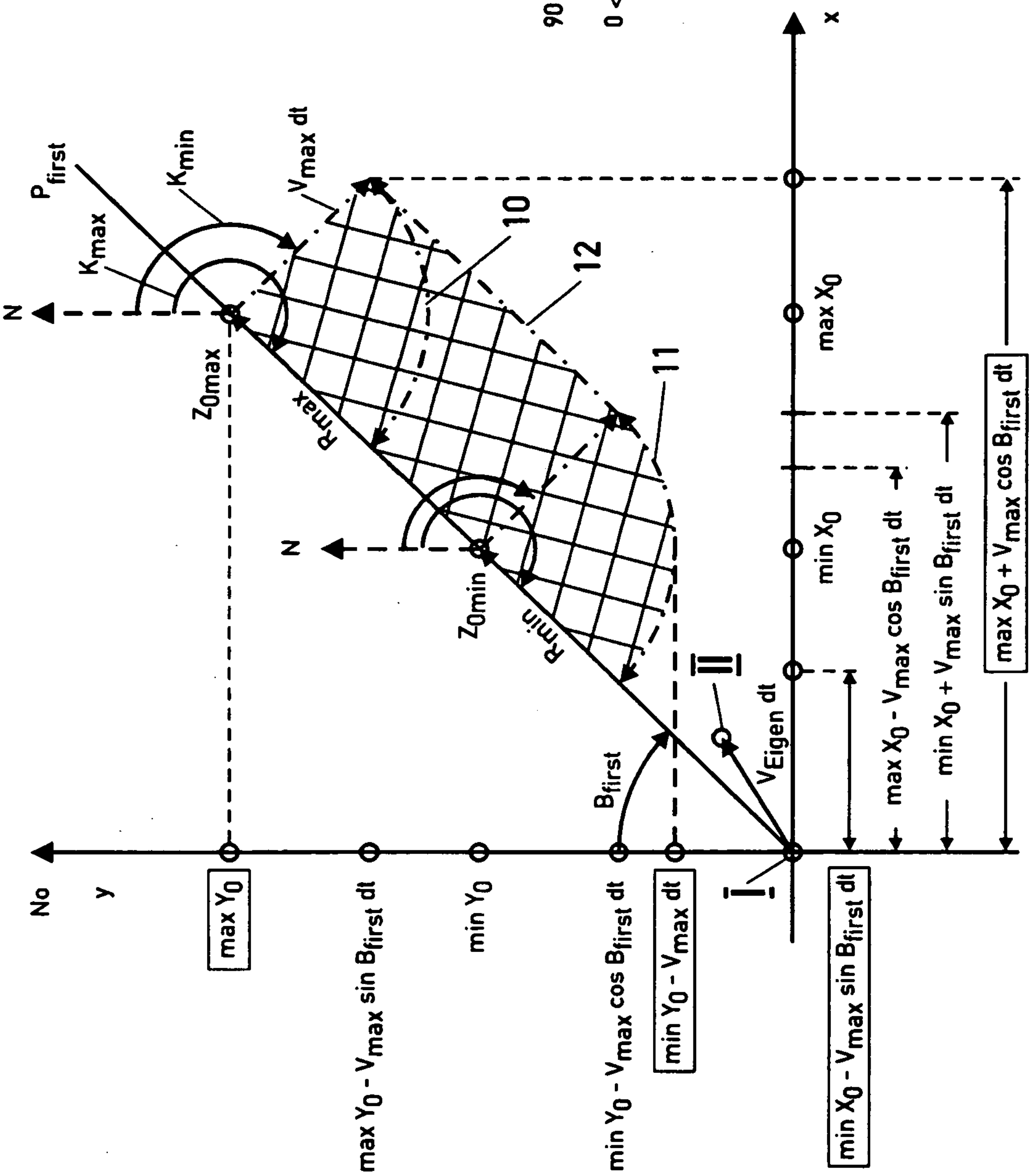
90 + B_first < K < B_first + 180°
0 < V < V_max
P_first
K_max
K_min
V_max dt
N
10
12
11
Z_0max
R_max
Z_0min
R_min
B_first
V_Eigen dt
II
I
No
y
x
max Y_0
max Y_0 - V_max sin B_first dt
min Y_0
min Y_0 - V_max cos B_first dt
min Y_0 - V_max dt
min X_0 - V_max sin B_first dt
max X_0
min X_0
max X_0 - V_max cos B_first dt
min X_0 + V_max sin B_first dt
max X_0 + V_max cos B_first dt

Fig. 1

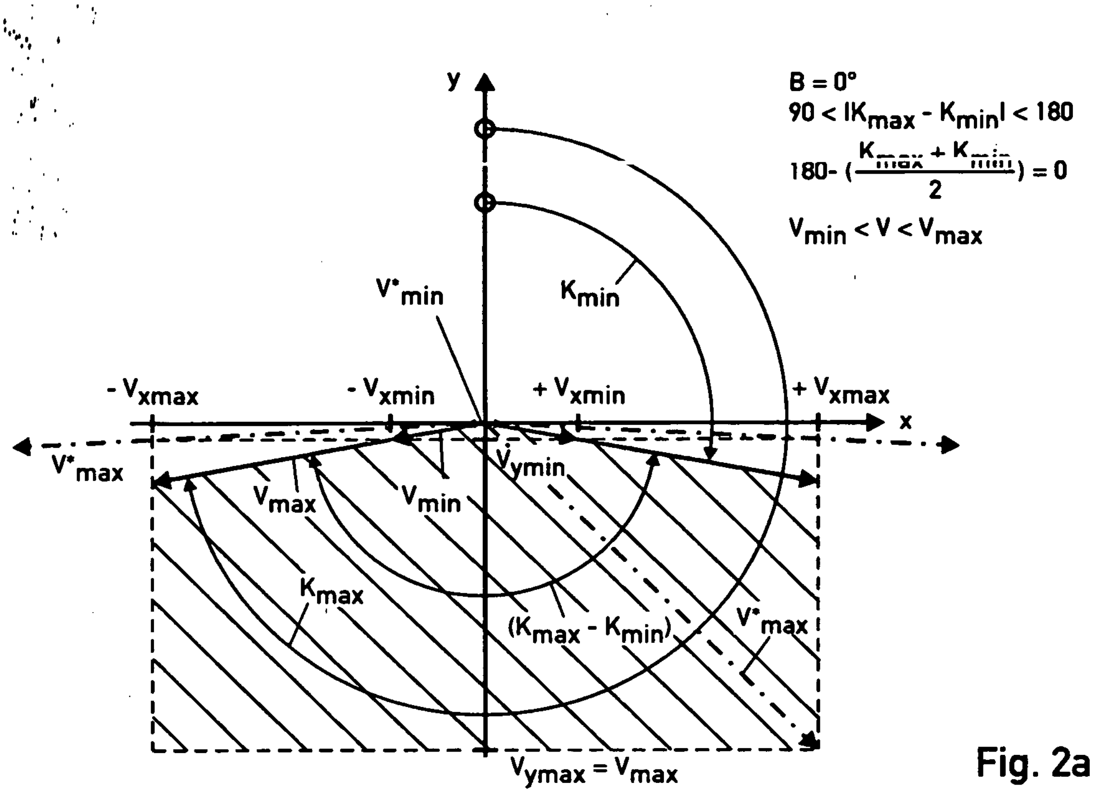


Fig. 2a

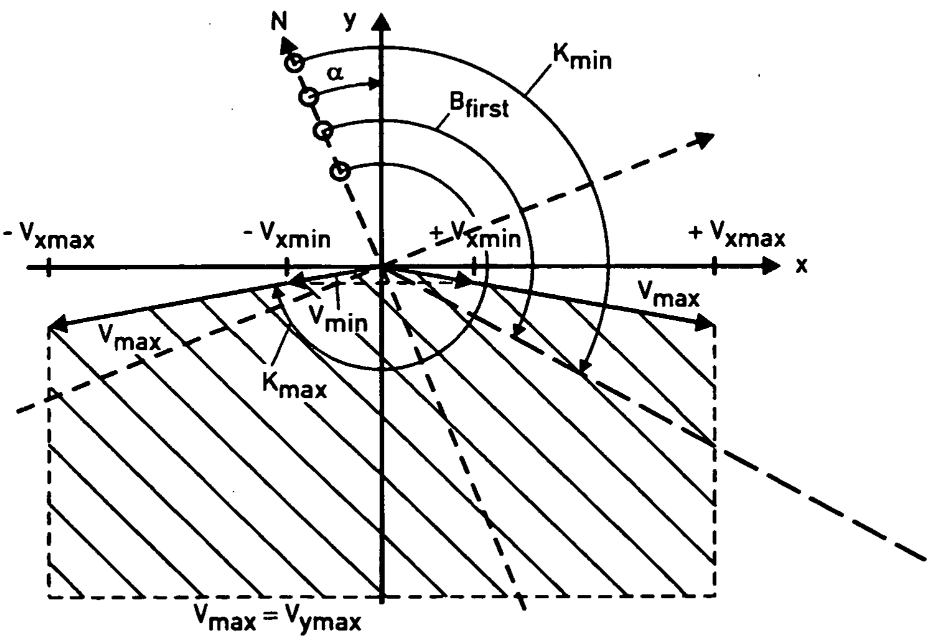


$B = B_{first}$

$90 < |K_{max} - K_{min}| < 180$

$180 - \frac{(K_{max} + K_{min})}{2} = \alpha$

Fig. 2b

Fig. 2

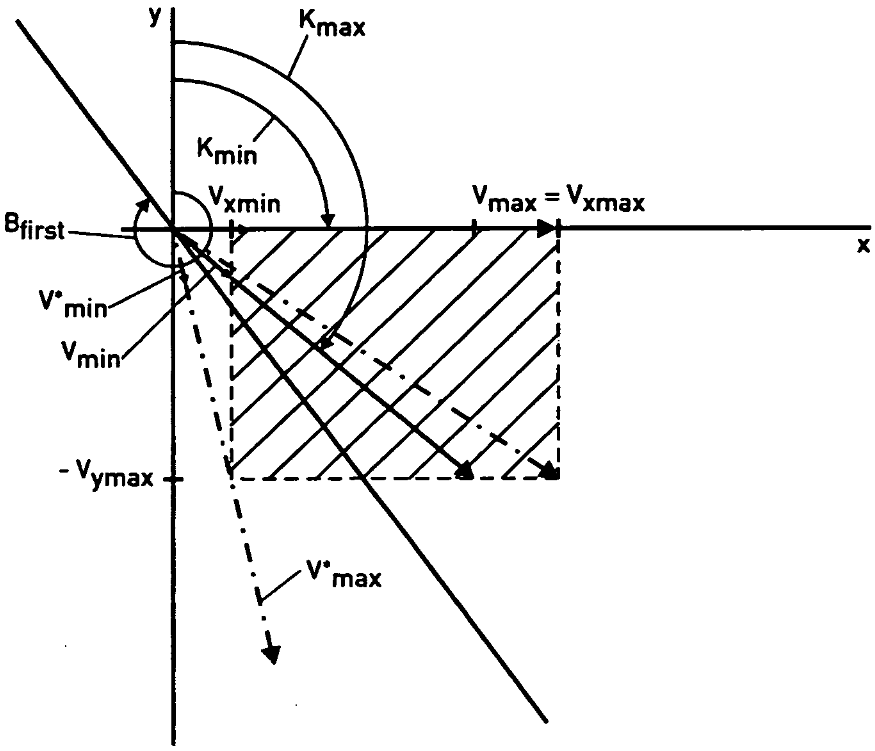


$B = B_{first}$

$90° < K < K_{max}$

$|K_{max} - K_{min}| < 90°$

$V_{min} < V < V_{max}$

Fig. 3

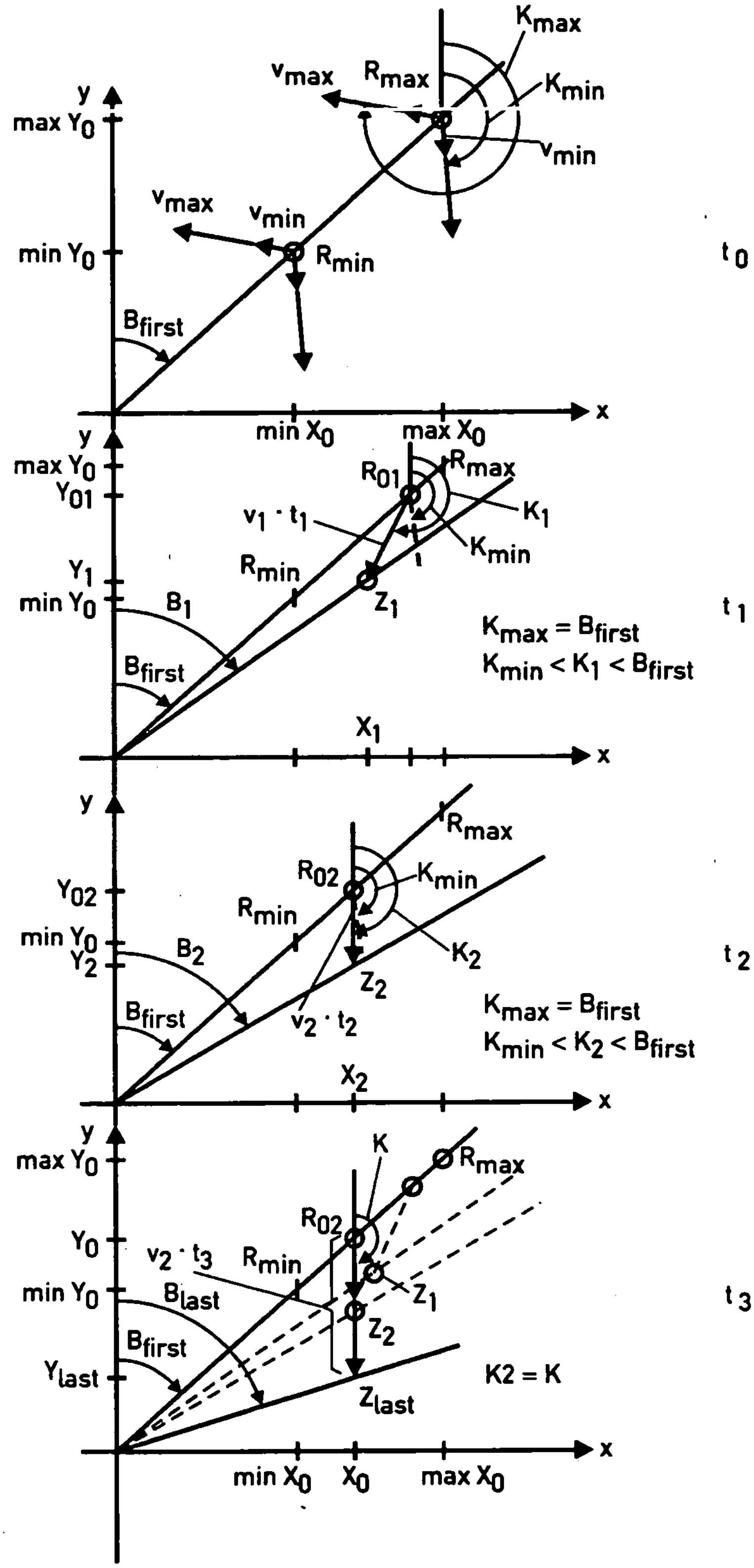


Fig. 4.1

Fig. 4.2

Fig. 4.3

Fig. 4.4

Fig. 4

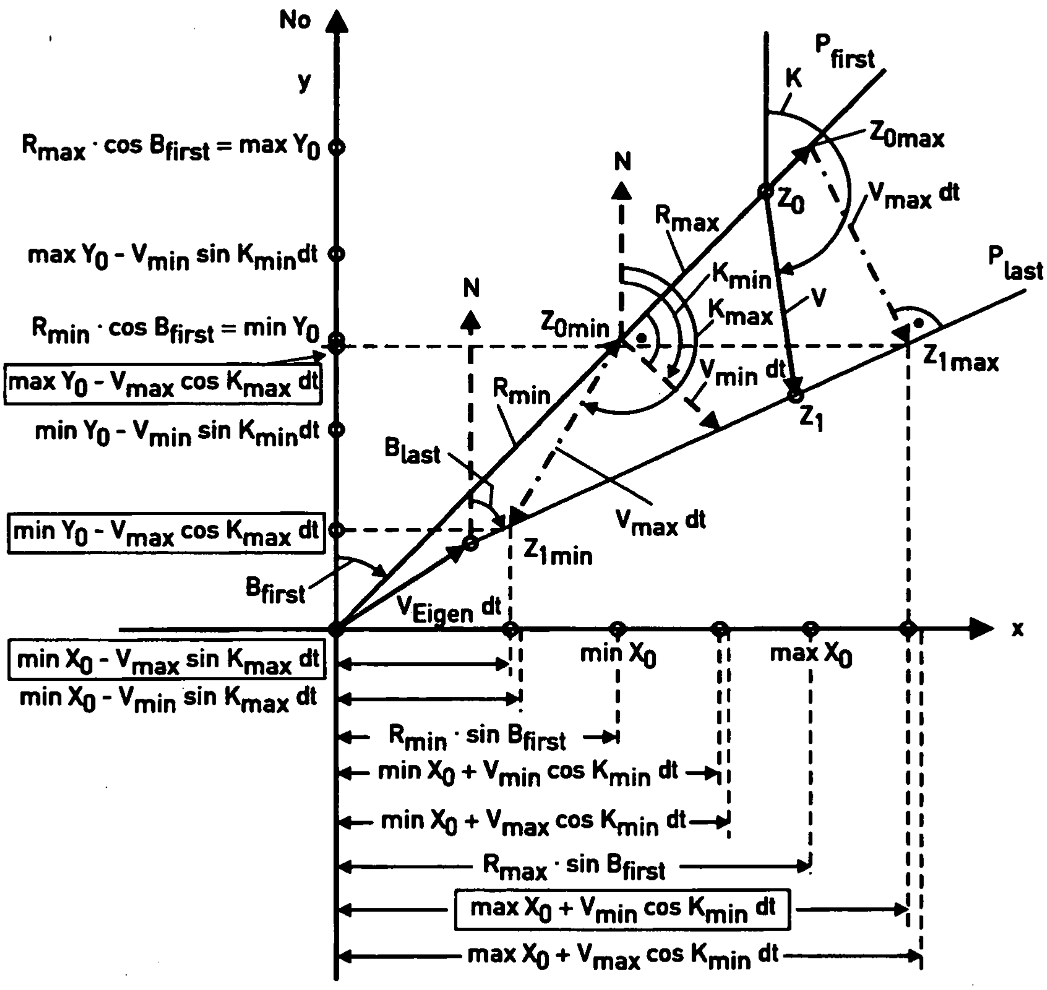
No
y
$R_{max} \cdot \cos B_{first} = \max Y_0$
$\max Y_0 - V_{min} \sin K_{min} dt$
$R_{min} \cdot \cos B_{first} = \min Y_0$
$\max Y_0 - V_{max} \cos K_{max} dt$
$\min Y_0 - V_{min} \sin K_{min} dt$
$\min Y_0 - V_{max} \cos K_{max} dt$
$B_{first}$
$B_{last}$
$V_{Eigen}$ dt
$\min X_0 - V_{max} \sin K_{max} dt$
$\min X_0 - V_{min} \sin K_{max} dt$
$R_{min} \cdot \sin B_{first}$
$\min X_0 + V_{min} \cos K_{min} dt$
$\min X_0 + V_{max} \cos K_{min} dt$
$R_{max} \cdot \sin B_{first}$
$\max X_0 + V_{min} \cos K_{min} dt$
$\max X_0 + V_{max} \cos K_{min} dt$
min $X_0$
max $X_0$
x
N
N
$R_{max}$
$R_{min}$
$K_{min}$
$K_{max}$
V
K
$P_{first}$
$P_{last}$
$Z_{0max}$
$Z_0$
$Z_{0min}$
$V_{max}$ dt
$V_{min}$ dt
$V_{max}$ dt
$Z_1$
$Z_{1max}$
$Z_{1min}$

Fig. 5

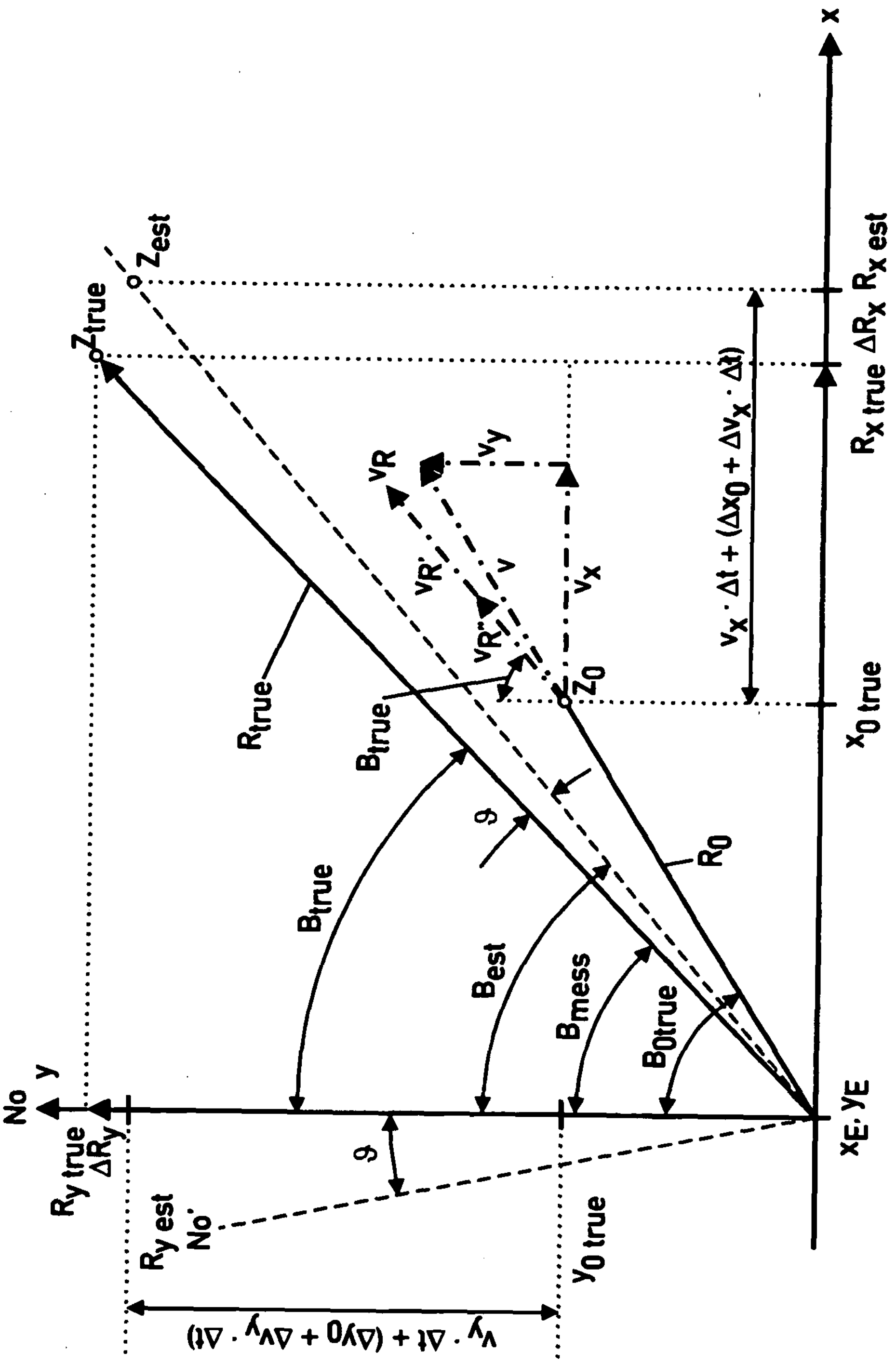
x
y
No
No'
$R_{y\,true}$
$\Delta R_y$
$R_{y\,est}$
$y_{0\,true}$
$v_y \cdot \Delta t + (\Delta y_0 + \Delta v_y \cdot \Delta t)$
$x_E, y_E$
$x_{0\,true}$
$R_{x\,true}$
$\Delta R_x$
$R_{x\,est}$
$v_x \cdot \Delta t + (\Delta x_0 + \Delta v_x \cdot \Delta t)$
$Z_{true}$
$Z_{est}$
$Z_0$
$R_{true}$
$R_0$
$B_{true}$
$B_{est}$
$B_{mess}$
$B_{0true}$
$\vartheta$
$v_R$
$v_R'$
$v_R''$
v
$v_x$
$v_y$

Fig. 6

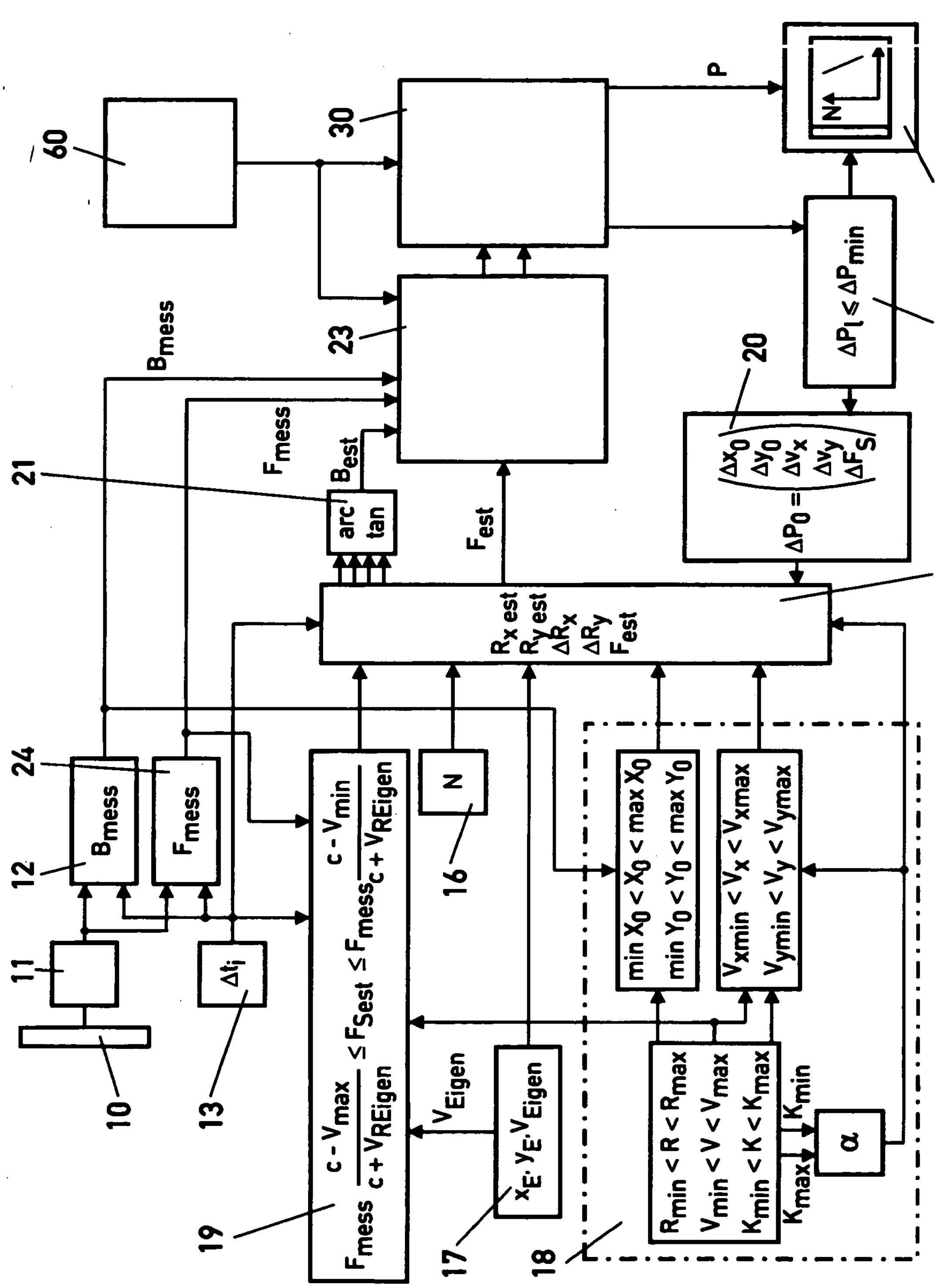

10
11
12
13
15
16
17
18
19
20
21
23
24
30
31
60
100
$B_{mess}$
$F_{mess}$
$\Delta t_i$
$B_{est}$
arc tan
$F_{est}$
N
$V_{Eigen}$
$x_E, y_E, V_{Eigen}$
$F_{mess}\frac{c - V_{max}}{c + V_{REigen}} \leq F_{Sest} \leq F_{mess}\frac{c - V_{min}}{c + V_{REigen}}$
$R_{x\,est}$
$R_{y\,est}$
$\Delta R_x$
$\Delta R_y$
$F_{est}$
$\min X_0 < X_0 < \max X_0$
$\min Y_0 < Y_0 < \max Y_0$
$V_{xmin} < V_x < V_{xmax}$
$V_{ymin} < V_y < V_{ymax}$
$R_{min} < R < R_{max}$
$V_{min} < V < V_{max}$
$K_{min} < K < K_{max}$
$K_{max}$
$K_{min}$
α
$\Delta P_0 = \begin{pmatrix} \Delta x_0 \\ \Delta y_0 \\ \Delta v_x \\ \Delta v_y \\ \Delta F_S \end{pmatrix}$
$\Delta P_l \leq \Delta P_{min}$
P
N

Fig. 7

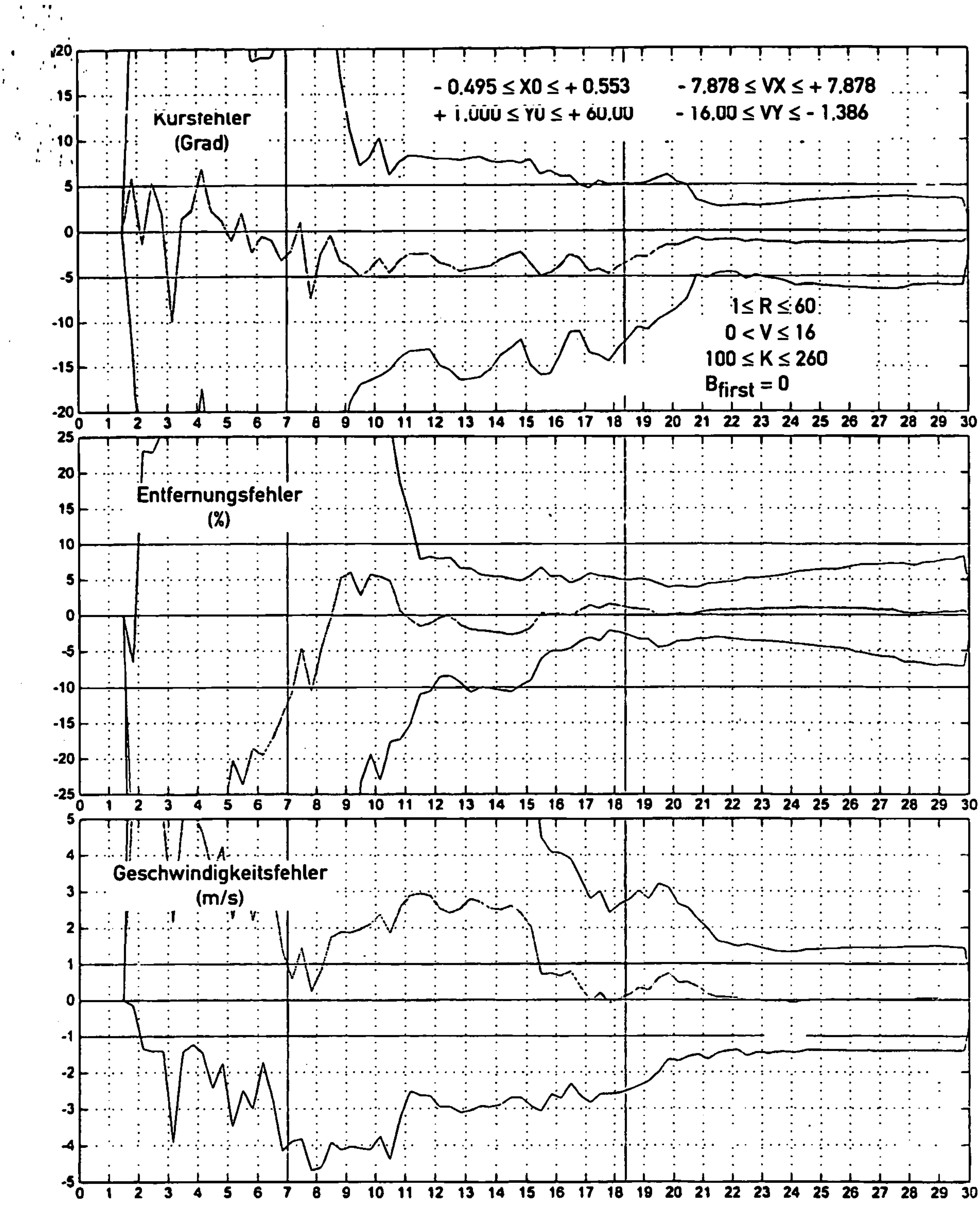


Zeit (min)

Eigenlegs:
L = 420, VE = 6, K = 70
L = 540, VE = 6, K = 288
L = 900, VE = 6, K = 73
L = 900, VE = 6, K = 289
L = 252, VE = 6, K = 87

Fig. 8

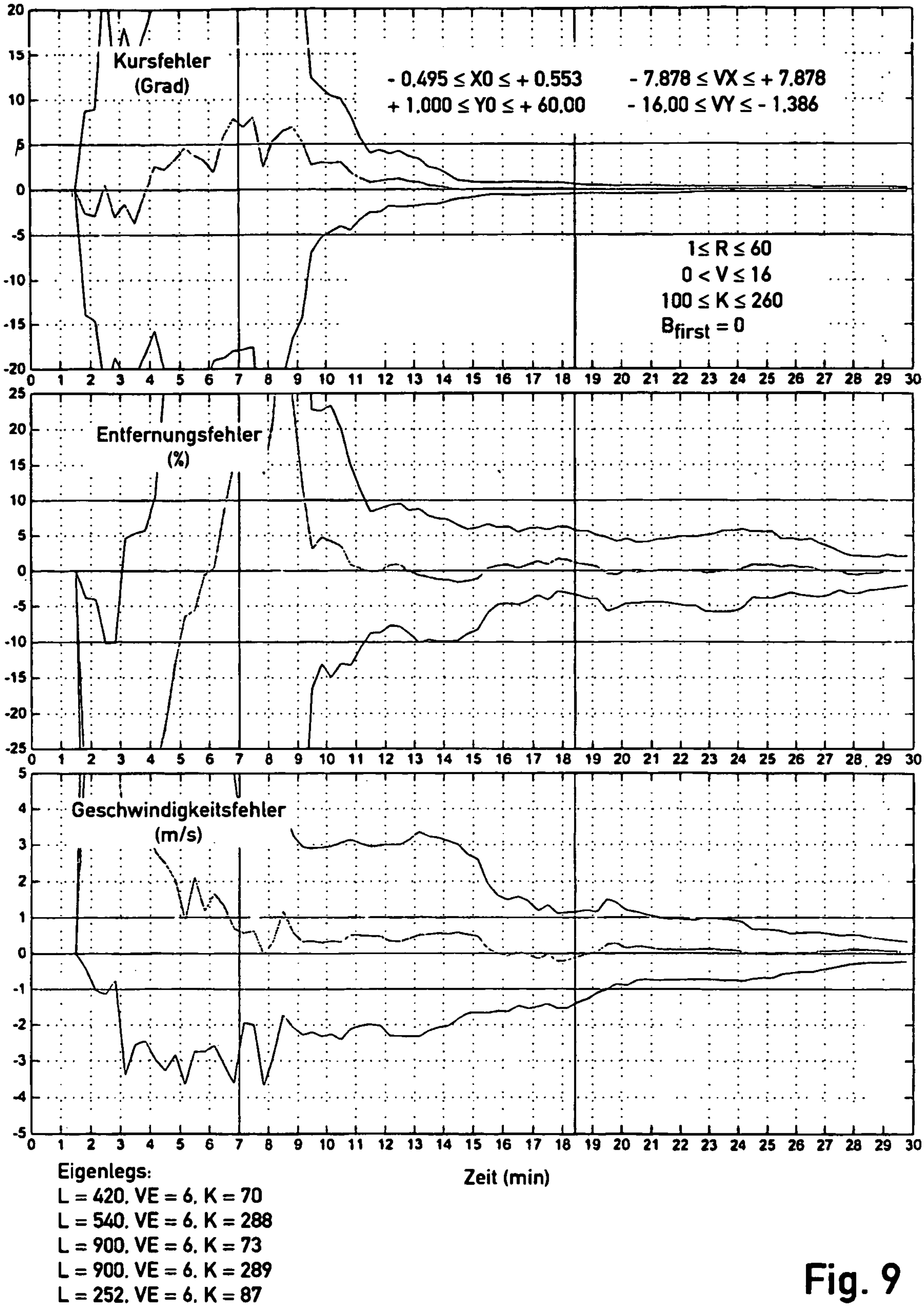

Kursfehler
(Grad)
- 0.495 ≤ X0 ≤ + 0.553
+ 1.000 ≤ Y0 ≤ + 60.00
- 7.878 ≤ VX ≤ + 7.878
- 16.00 ≤ VY ≤ - 1.386
1≤ R ≤ 60
0 < V ≤ 16
100 ≤ K ≤ 260
Bfirst = 0
Entfernungsfehler
(%)
Geschwindigkeitsfehler
(m/s)
Eigenlegs:
L = 420. VE = 6. K = 70
L = 540. VE = 6. K = 288
L = 900. VE = 6. K = 73
L = 900. VE = 6. K = 289
L = 252. VE = 6. K = 87
Zeit (min)


Fig. 9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3446658 C2
- US 5877998 A
- US 6009185 A
- DE 10129726 A1